(19) Europäisches Patentamt / European Patent Office / Office européen des brevets

(11) **EP 3 671 373 A1**

(12) **EUROPÄISCHE PATENTANMELDUNG**

(43) Veröffentlichungstag:
**24.06.2020 Patentblatt 2020/26**

(51) Int Cl.:
***G05B 13/04*** *(2006.01)* ***B23K 26/00*** *(2014.01)*

(21) Anmeldenummer: **18214096.2**

(22) Anmeldetag: **19.12.2018**

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR**<br>Benannte Erstreckungsstaaten:<br>**BA ME**<br>Benannte Validierungsstaaten:<br>**KH MA MD TN** | (71) Anmelder: **Bystronic Laser AG**<br>**3362 Niederönz (CH)**<br><br>(72) Erfinder: **Wittwer, Stefan**<br>**3360 Herzogenbuchsee (CH)**<br><br>(74) Vertreter: **Schwarz und Baldus Patentanwälte**<br>**Hermann-Schmid-Straße 10**<br>**80336 München (DE)** |

(54) **PROGNOSEVERFAHREN ZUR PROGNOSE EINES BEARBEITUNGSERGEBNISSES FÜR EIN LASERBEARBEITUNGSVERFAHREN**

(57)     Die Erfindung betrifft die automatische Parametrierung eines Laserschneidverfahrens auf Basis einer Soll-Vorgabe für das gewünschte Bearbeitungsergebnis ($E_{soll}$) und betrifft weiterhin die Prognose für ein Bearbeitungsergebnisses (E) bei einem vorgegebenen Parametersatz für die Einstellung des Lasers (L). Dazu wird auf ein deterministisches Prozessmodel (M) zugegriffen, das in einer Datenbank (DB) gespeichert ist und u.a. Prozesskenngrößen (PKG) umfasst.

Fig.4

**Beschreibung**

Die vorliegende Erfindung betrifft das Gebiet der Laserbearbeitungsmaschinen und insbesondere Verfahren und Systeme zur automatischen Parametrierung einer Laseranlage bzw. eines Laserschneideverfahrens und zur Prognose von Ergebnisdaten.

Je nach gewünschter Bearbeitung können heute unterschiedliche Typen von Laserbearbeitungsmaschinen eingesetzt werden, um hochpräzise und performant gefertigte Bauteile zu erzeugen. So werden etwa Nd:YAG (1064 nm) und CO2-Laser für die Mikrobearbeitung von Halbleitersubstrat eingesetzt. Mit Yb:YAG-Faserlaser und CO2-Lasern mit mehreren Kilowatt Ausgangsleistung werden in der Makrobearbeitung u.a. metallische Werkstücke bis zu mehreren 10 mm Dicken geschnitten. Diese und andere Anwendungsbeispiele machen deutlich, dass die Steuerung und Überwachung der Qualität, der Stabilität, der Produktivität und weiterer Größen für ein mit der Laserbearbeitung erzeugtes Bearbeitungsergebnis am gefertigten Bauteil unabdingbar ist. In bestimmten Anwendungen ist es z.B. wichtig, den Neigungswinkel der Schnittkante zu überwachen, der unter anderem abhängig davon ist, mit welcher Fokuslage die Laserstrahlen auf das Werkstück fokussiert werden. Der physikalische Zusammenhang zwischen in diesem Beispiel der Fokuslage als Bearbeitungsparameter und dem Neigungswinkel der Schnittkante als Bearbeitungsergebnisparameter spielt hier eine wichtige Rolle, um die passenden Parameter für die Laserbearbeitung zu bestimmen.

Wollte man bisher im Stand der Technik, ein bestimmtes Bearbeitungsergebnis (z.B. ein bestimmtes Qualitätsmaß der gefertigten Bauteile, das sich mitunter in einer Grat- und/oder Schlackenbildung und/oder in einer Rauheit der Schnittkante widerspiegeln kann) erzielen, so griff man auf Erfahrungswissen zurück, um die jeweiligen Bearbeitungsparameter an der jeweiligen Maschine mit den jeweiligen technischen Eigenschaften (wie z.B. Strahlwerkzeugtyp, Düse etc.) derart einzustellen, dass das gewünschte Maß an Qualität erreicht werden kann. Es liegt auf der Hand, dass dieses Vorgehen zum einen viel Erfahrung erfordert und zum anderen nicht reproduzierbar und damit fehleranfällig ist. Weil das Verfahren zudem nicht skalierbar ist, ist es zeitaufwändig, da zumindest ein Testlauf und häufig auch mehrere Iterationen von Testläufen durchgeführt werden mussten, um quasi durch ein try-and-error-Verfahren diejenigen Einstellparameter zu bestimmten, die das gewünschte Resultat (Bearbeitungsergebnis) liefern, wobei dieses für jeden Werkstoff und jeden Anlagentyp wiederholt werden musste.

Um Reproduzierbarkeit und Skalierbarkeit zu erreichen, ist es grundsätzlich wünschenswert, die Wechselwirkung zwischen den Parametern, mit denen die Laserbearbeitungsmaschine betrieben wird, den damit zusammenhängenden physikalischen Prozesskenngrößen und dem daraus resultierenden Bearbeitungsergebnis berechnen zu können.

Die EP 2 533 934 B1 zeigt ein Verfahren zur Bestimmung der Qualität des Bearbeitungsergebnisses unter Verwendung eines Simulationsprogramms. Diese Schrift zeigt nicht, wie das erzeugte Modell im Betrieb aufgrund von berechneten Vergleichswerten angepasst, verbessert und weiterentwickelt werden kann. Zudem zeigt diese Schrift kein Parametrierverfahren., das zu einer gewünschten Soll-Vorgabe für das Bearbeitungsergebnis automatisch einen Parametersatz berechnet.

Die US 2017/0113300 A1 zeigt ein Verfahren zur Überwachung einer Laserbearbeitung, bei dem nach einer Unterbrechung des Schneidvorganges die Qualität der Bearbeitung am Werkstück erfasst wird und mit einer Qualitätsvorgabe verglichen wird. Bei Abweichung können die Schneidparameter angepasst werden. Die Druckschrift beschreibt allerdings nicht, auf welche Art und Weise die Schneidparameter angepasst werden sollen. Der Fachmann kann aus dieser Schrift keine Hinweise entnehmen, wie er die Einstellparameter konkret ändern soll, um zu einem besseren Schneidergebnis zu gelangen. Zudem zeigt auch diese Schrift kein Parametrierverfahren.

Der vorliegenden Erfindung liegt somit die Aufgabe zugrunde, das Betreiben einer Laserbearbeitungsmaschine zu verbessern. Insbesondere soll das Betreiben für den Anwender vereinfacht, der Verfahrensdurchsatz erhöht und die Qualität des Fertigungsprozesses verbessert werden. Des Weiteren sollen die für den Bearbeitungsvorgang relevanten Parameter sowie deren physikalischen Zusammenhänge mit dem Bearbeitungsprozess und dem Bearbeitungsergebnis berechnet werden können (Parametrierverfahren).

Diese Aufgabe wird gelöst durch ein Prognoseverfahren, ein Parametrierverfahren, ein Computerprogramm, ein Parametriermodul, ein Prognosemodul, eine Laserbearbeitungsmaschine und ein System gemäß den beiliegenden unabhängigen Patentansprüchen, wobei die vorstehend genannten Gegenstände auf mindestens drei verschiedene Datenstrukturen (Bearbeitungsparameter, Prozesskenngrößen, Bearbeitungsergebnis) zugreifen. Vorteilhafte Ausführungsformen, weitere Merkmale und Vorteile ergeben sich aus den Unteransprüchen und der nachfolgenden Beschreibung.

Gemäß einem ersten Aspekt betrifft die Erfindung ein Prognoseverfahren für ein Bearbeitungsergebnis für ein Laserbearbeitungsverfahren. Bei dem Prognoseverfahren kommen folgende Verfahrensschritte zur Anwendung:

- Einlesen eines Bearbeitungsparametersatzes, der zur Ansteuerung einer Laserbearbeitungsmaschine dient;
- Zugreifen auf ein deterministisches Prozessmodell, um für den eingelesenen Parametersatz einen Prognosedatensatz für das Bearbeitungsergebnis zu berechnen. Das deterministische Prozessmodell greift auf zumindest drei verschiedene Datenstrukturen zu, um physikalische, multidimensionale Zusammenhänge zwischen

- ◦ dem jeweiligen Parametersatz und
- ◦ den den physikalischen Laserbearbeitungsprozess in der Prozesszone repräsentierenden Prozesskenngrößen und
- ◦ dem Bearbeitungsergebnis

- zu modellieren.

In einer vorteilhaften Ausführungsform der Erfindung kann das Prognoseverfahren Weiterverarbeitungsschritte umfassen, die den berechneten Prognosedatensatz z.B. in eine Datenbank speichern und/oder auf einer Ausgabeeinheit (z.B. grafisch, auf einem Monitor/Terminal) ausgeben. Darüber hinaus kann der berechnete Prognosedatensatz einer Verifikationsprüfung unterzogen werden (z.B. das Überprüfen einer Plausibilität, anhand von vordefinierten Regeln oder der Abgleich mit historischen Daten und/oder mit einem statistischen Mittel etc.).

Der Erfinder hat erkannt, dass das bisherige Verfahren zum Betreiben von Laserbearbeitungsmaschinen insofern defizitär ist, da spezifisches Erfahrungswissen zu mehreren wechselwirkenden physikalischen Vorgängen in der Bearbeitungszone notwendig ist, um den Laserprozess in Hinblick auf ein erwünschtes Bearbeitungsergebnis optimal steuern zu können und, um bei einem vorgegeben Parametersatz (der Begriff wird im Folgenden gleichbedeutend verwendet zum Begriff Bearbeitungsparametersatz) zur Einstellung des Lasers, der gesamten Laserbearbeitungsanlage, der Kontur des erzeugten Werkstücks und/oder dem Bearbeitungsergebnis am Werkstück, vorhersagen zu können, wie das Bearbeitungsresultat (am gefertigten Bauteil: Schnittkante, Rauheit etc.) aussehen wird. Insbesondere konnten bisher bestimmte den Laserbearbeitungsprozess am Werkstück betreffende, physikalische Zusammenhänge nur empirisch analysiert werden. Eine Berechnung dieser Zusammenhänge und von relevanten Größen war nicht möglich. Ausgehend von dieser Ausgangslage, wurde ein deterministisches Prozessmodel entwickelt, das die physikalischen multikausalen Zusammenhänge zwischen dem Parametersatz zur Einstellung des Lasers, den Prozesskenngrößen in der Prozesszone und dem Bearbeitungsergebnis modelliert. Die bekannten mathematischen Gleichungssysteme (z.B. R. Poprawe, "Lasertechnik für die Fertigung", Springer-Verlag 2005, p.455) für die Laserbearbeitung wurden dabei auf geeignete Weise angepasst und vereinfacht, um für die auf dem Modell basierenden Algorithmen eine Performance erlangen zu können, die auf die industrielle Anwendung abgestimmt ist. Alle der vorstehend genannten Verfahrensschritte können gesamthaft als eine Simulation der realen Laserbearbeitung bezeichnet werden.

Gemäß diesem Vorschlag werden die im Stand der Technik allgemein bekannten Gleichungssysteme für die industrielle Fertigung ausgewählt und vereinfacht. Die Gleichungen des Modellkerns sind zeitabhängige Erhaltungsgleichungen der Physik: Sie sind universell gültig und deshalb anwendbar auf die multiphysikalisch gekoppelten Vorgänge in der Prozesszone der Laserbearbeitung. Im Modell sind die Gleichungen für die in der Prozesszone relevanten Erhaltungsgrößen Masse (oder Partikel), Energie und Impuls auf die vorkommenden Aggregatszustände fest, flüssig und gasförmig implementiert. Häufig sind diese Gleichungen für den flüssigen Aggregatszustand (Schmelze) und in stationärer Formulierung in der Fachliteratur notiert (z.B. D. Schuöcker, "Dynamic Phenomena in Laser Cutting and Cut Quality", Appl.Phys. B 40, p.9-14, 1986). Sie ermöglichen eine mathematisch und numerisch umsetzbare und trotzdem vollständige Modellierung der Schneidphysik in der Prozesszone und bilden somit eine erweiterbare numerische Rahmenstruktur (Framework) zur Lösung der Aufgabe. Vorteilhafterweise werden im Modell die Erhaltungsgleichungen von der stationären Formulierung zur zeitabhängigen Formulierung erweitert. Dies liefert maximale Genauigkeit bei gleichzeitiger Berücksichtigung der begrenzten Rechenkapazitäten für Prozesskenngrößen bzw. Parametersätze in industriellen Anwendungen. Mit anderen Worten, basiert das Modell auf einem Modellkern, dessen Erhaltungsgleichungen gleichzeitig alle der nachstehenden technischen Kriterien erfüllen: Sie sind physikalisch gültig und numerisch umsetzbar, so dass sie mit vertretbarem Aufwand und in akzeptabler Rechenzeit direkt vor Ort an der Maschine gerechnet werden können. Zudem ist der Modellkern erweiterbar. Durch einen SOLL-IST-Vergleich zwischen dem vom Modell prognostizierten Bearbeitungsergebnis und dem gemessenen IST-Bearbeitungsergebnis können bei Abweichung neue Versionen des Modellkerns eingespielt werden.

Insbesondere können folgende gekoppelten Erhaltungsgleichungen des Modellkerns der ersten Stufe für den flüssigen Zustand der Schnittkante des bearbeiteten Werkstücks (repräsentativ für das Bearbeitungsergebnis) in der Zeitdomäne für den Fall berücksichtigt werden, dass der Schmelzpunkt $T_m$ des Werkstücks kleiner ist als die Temperatur der geschmolzenen Oberfläche T:

Die Erhaltungsgleichung für den Massenstrom der Schmelze:

$$\frac{dm_m}{dt} = \rho_m \cdot \frac{D\langle b_c \rangle}{\sqrt{1-\mu^2}} \cdot \left( \frac{d\langle D_m \rangle}{dt} + \frac{\mu}{1-\mu^2} \cdot \frac{d\mu}{dt} \cdot \langle D_m \rangle \right) = B_m(t)$$

Die Erhaltungsgleichung für den Energiestrom (Leistungsbilanz) der Schmelze:

$$\frac{dE_m}{dt} = \frac{c_p}{2} \cdot m_m \cdot \frac{dT}{dt} + \left(\frac{c_p}{2} \cdot (T + T_m) + h_m\right) \cdot \frac{dm_m}{dt} = B_E(t)$$

Die Erhaltungsgleichung für den Impulsstrom (Kraft) der Schmelze:

$$\frac{d\boldsymbol{p}_m}{dt} = \frac{1}{4} \cdot \left(m_m \cdot \frac{d\boldsymbol{v}_j}{dt} + \boldsymbol{v}_j \cdot \frac{dm_m}{dt}\right) = \boldsymbol{B}_p(t)$$

Folgende Erhaltungsgleichungen des Modellkerns können für den flüssigen Zustand der Schnittkante des bearbeiteten Werkstücks auf der zweiten Stufe in der Zeitdomäne für den Fall berücksichtigt werden, wenn der Schmelzpunkt $T_m$ des Werkstücks kleiner ist als die Temperatur der geschmolzenen Oberfläche T:
Die Erhaltungsgleichung für die durchschnittliche Dicke der Schmelze ($D_m$):

$$\frac{d\langle D_m \rangle}{dt} = \frac{\sqrt{1-\mu^2}}{\rho_m \cdot D\langle b_c \rangle} \cdot B_m(t) - \frac{\mu}{1-\mu^2} \cdot \frac{d\mu}{dt} \cdot \langle D_m \rangle$$

Die Erhaltungsgleichung für die absolute die Oberflächentemperatur (7) der Schmelze:

$$\frac{dT}{dt} = \frac{2}{m_m \cdot c_p} \cdot \left(B_E(t) - \left(\frac{c_p}{2} \cdot (T + T_m) + h_m\right) \cdot \frac{dm_m}{dt}\right)$$

Die Erhaltungsgleichung für die Austrittsgeschwindigkeit $v_j$ der Schmelzoberfläche an der Werkstückunterseite:

$$\frac{d\boldsymbol{v}_j}{dt} = \frac{1}{m_m} \cdot \left(4\boldsymbol{B}_p(t) - \frac{dm_m}{dt} \cdot \boldsymbol{v}_j\right)$$

mit:

$$\frac{dm_m}{dt} = B_m(t),$$

mit folgender Legende:

$B_E$       Bilanzfunktion des Energiestroms
$B_m$      Bilanzfunktion des Massenstroms
$\boldsymbol{B}_p$       Bilanzfunktion des Impulsstroms
$D$        Dicke des Werkstücks
$\langle D_m \rangle$     durchschnittliche Dicke der Schmelze
$E_m$      thermische Energie der Schmelze
$T$        Temperatur der Schmelzoberfläche
$T_a$       Umgebungstemperatur
$T_m$      Schmelztemperatur des Werkstücks
$\langle b_c \rangle$     durchschnittliche Fugenbreite
$c_p$       spezifische Wärmekapazität
$h_m$      spezifische Schmelzenthalpie (latente Wärme)
$m_m$     Masse der Schmelze
$\boldsymbol{p}_m$      Impuls der Schmelze

$v_c$      Bearbeitungsgeschwindigkeit (Vorschub)
$v_j$      Austrittsgeschwindigkeit der Schmelzoberfläche
$t$       Zeit
$\mu$      Neigungskosinus der Schmelzfront
$\rho_m$    Massendichte der Schmelze.

Das Prozessmodell bietet vorteilhafterweise einen modularen Aufbau mit mehreren invertierbaren Algorithmen (Algorithmus für eine Prognoseverfahren und Algorithmus für ein Parametrierverfahren) und mindestens drei verschiedenen Datenstrukturen als Schnittstellen zwischen den Algorithmen und der Außenwelt. Durch die Invertierbarkeit der Algorithmen kann der Datenfluss des deterministischen Prozessmodells umgekehrt werden; dadurch bilden sie sowohl Eingangsdaten in Ergebnisdaten und deren Umkehrfunktion Ergebnisdaten in Eingangsdaten ab. Dies hat den Vorteil, dass durch die sequentielle Ausführung von zwei Algorithmen auf demselben Eingangs-/Ergebnisdaten, das Modell einer Selbstprüfung unterzogen werden kann.

In einer bevorzugten Ausführungsform der Erfindung kann das Prognoseverfahren zusätzlich folgende Schritte umfassen:

- Ausführen der realen Laserbearbeitung mit dem eingelesenen Parametersatz (für die Bearbeitungsparameter);
- (Vorzugsweise automatisches) Messen des Bearbeitungsergebnisses als IST-Werte;
- Vergleichen der gemessenen IST-Werte für das Bearbeitungsergebnis mit dem Prognosedatensatz und Ausgabe der (berechneten) Vergleichswerte als Vergleichsergebnis.

Optional können zur Ausgabe der berechneten Vergleichswerte können auf Basis der berechneten Vergleichswerte automatisch vorkonfigurierte Anpassungsprozeduren getriggert werden. Insbesondere kann ein Anpassen des Prozessmodells über die Anpassung von Werten in seinen mindestens drei Datenstrukturen ausgeführt werden. Vorzugsweise kann die jeweilige Anpassungsprozedur direkt auf einem Terminal der Maschine ausgeführt werden. Es ist auch möglich, die Anpassungsprozedur zentral (z.B. auf einem Server) und/oder auf Arbeitsplatzrechnern auszuführen. Dabei stehen die jeweiligen Rechner in Datenverbindung mit der Einheit, auf der das Prognoseverfahren ausgeführt und/oder das Vergleichsergebnis bereitgestellt wird. Weiterhin kann bei einer identifizierten Abweichung das Prozessmodell über eine Anpassung der Algorithmen mit Versionsinkrement angepasst werden. Nach erfolgter Anpassung auf Grundlage einer identifizierten Abweichung gilt das deterministische Prozessmodell als validiert. Weitere Anpassungsprozeduren können extern, in der Außenwelt ausgeführt werden, z.B. als Service an der Maschine bei großen Abweichungen und/oder Wartungseinsätze bei der Messinfrastruktur, z.B. wenn Messungenauigkeiten festgestellt werden. Diese Anpassungsprozeduren können automatisch eingeleitet werden und bei Bedarf durch ein Bestätigungssignal verifiziert werden.

Damit kann vorteilhafterweise die Qualität des Prozessmodells ständig und dynamisch an neue technische Randbedingungen angepasst werden und erweitert werden. Vorteilhafterweise kann dies auch direkt vor Ort nach Auslieferung beim Kunden erfolgen. Vorzugsweise wird das Vergleichsergebnis lokal an der Maschine (Laser) auf einer Ausgabeeinheit (z.B. Terminal) ausgegeben oder angezeigt.

In einer vorteilhaften Weiterbildung der Erfindung kann das Zugreifen auf das deterministische Prozessmodell mittels eines Applikations-Simulationsalgorithmus und/oder mittels eines Fertigungsprognosealgorithmus erfolgen.

Gemäß einem zweiten Aspekt bezieht sich die Erfindung auf ein Parametrierverfahren zur automatischen Berechnung eines Parametersatzes zur Parametrierung eines Laserbearbeitungsverfahrens. Das Parametrierverfahren umfasst folgende Verfahrensschritte:

- Einlesen eines SOLL-Wertes für ein Bearbeitungsergebnis;
- Zugreifen auf ein deterministisches Prozessmodell, um für den eingelesenen SOLL-Wert für das Bearbeitungsergebnis zumindest einen Parametersatz zu berechnen, der den eingelesenen SOLL-Wert erfüllt, wobei das deterministische Prozessmodell zumindest drei Datenstrukturen verwendet und physikalische, multidimensionale Zusammenhänge zwischen

     o dem jeweiligen SOLL-Wert für das Bearbeitungsergebnis und
     ◦ den den physikalischen Laserbearbeitungsprozess in der Prozesszone repräsentierenden Prozesskenngrößen und
     ◦ dem Bearbeitungsergebnis

- modelliert.

In einer vorteilhaften Ausführungsform der Erfindung kann eine Ausgabe des berechneten Parametersatzes (für die Bearbeitungsparameter) an die Steuerungseinheit der Laserbearbeitungsanlage und/oder ein Einlesen in eine Datenbank und/oder eine Ausgabe an eine Ausgabeeinheit ausgeführt werden.

Das Parametrierverfahren ist sozusagen das digitale Gegenstück zu dem Prognoseverfahren und im mathematischen Sinne invers dazu. Führt man mit einem Eingangsvektor die beiden Verfahren sequentiell aus, muss man wieder auf den jeweiligen Eingangsvektor kommen. Durch die Bereitstellung der beiden Verfahren, die beide computerimplementiert sind und vorzugsweise gemeinsam auf einem Modul der Laseranlage implementiert sind, wird es vorteilhafterweise möglich, eine zusätzliche Überprüfungsebene einzuführen und anzuwenden. Damit kann die Sicherheit des modell-basierten automatischen Verfahrens gesteigert werden.

In einer weiteren bevorzugten Ausführungsform der Erfindung umfasst das Parametrierverfahren weiterhin:

- Bearbeiten eines realen Werkstückes mit dem berechneten Parametersatz;
- Messen von IST-Werten für das Bearbeitungsergebnis am gefertigten Werkstück;
- Vergleichen zwischen SOLL-Werten und IST-Werten für das Bearbeitungsergebnis und bei Abweichung:
- Ausgabe der berechneten Vergleichswerte als Vergleichsergebnis.

Die berechneten Vergleichswerte können in einer bevorzugten Ausführungsform der Erfindung verwendet werden zum:

- Kalibrieren des berechneten Parametersatzes (zum Erzeugen eines kalibrierten Parametersatzes) durch Zugreifen auf das deterministische Prozessmodell, so dass der eingelesen SOLL-Wert für das Bearbeitungsergebnis eingehalten werden kann.

Dies hat den Vorteil, dass das Modell fortlaufend, dynamisch und vor Ort im Betrieb beim Kunden verbessert werden kann.

In einer vorteilhaften Weiterbildung der Erfindung kann der berechnete Vergleichswert zur Regelung des Laserbearbeitungsprozesses verwendet werden. Mit in situ Prozessbeobachtungen auf dem Stand der Technik, beispielsweise offenbart in der US 2017/0113300 A1 sind Messungen an der Prozesszone während der Bearbeitung (in situ) möglich. Die Messgrößen wie zum Beispiel Fugenbreite oder Nachlauf der Schmelze sind auch als berechnete Prozesskenngrößen in einer der mindestens drei Datenstrukturen des Prozessmodells enthalten. Analog zu den oben dokumentierten Schritten kann aus den SOLL- und IST-Werten der Prozesskenngrößen ein Vergleichsergebnis ermittelt werden, das zur laufenden Neuberechnung des Bearbeitungsparametersatzes genutzt werden kann. Dieses Verfahren ist eine modellgestützte Regelung, wo Messwerte einer Prozessbeobachtung als Eingabe in den entsprechenden Algorithmus des deterministischen Prozessmodells eingesetzt werden. Bei einer modell-gestützten Regelung werden die Schritte Bearbeiten, Messen, Vergleichen und Kalibrieren iterativ so oft wiederholt, bis eine Abweichung zwischen SOLL-Wert und IST-Wert für das Bearbeitungsergebnis einen vorkonfigurierbaren Schwellenwert unterschreitet. Der technische Vorteil ist darin zu sehen, dass die Regelung direkt auf Basis des real erzeugten Bearbeitungsergebnisses (Messwerte am Werkstück) ausgeführt werden kann.

In einer weiteren Ausführungsform der Erfindung erfolgt das Zugreifen auf das deterministische Prozessmodell mittels eines Applikations-Kalibrationsalgorithmus und/oder mittels eines Applikationsberechnungsalgorithmus. Damit können zwei modulare Applikationen bereitgestellt werden, die jeweils eine Umkehrfunktion auf dem Prozessmodell ausführen.

Gemäß einer anderen, vorteilhaften Ausführungsform ist das Bearbeitungsergebnis vorkonfiguriert. Das Bearbeitungsergebnis ist ein Datentupel mit messbaren Angaben zur Qualität des Laserbearbeitungsverfahrens, insbesondere Angaben zu einer Grathöhe bei einem Schmelzschnitt, einer Schlackenhöhe bei einem Brennschnitt, einer Kantenneigung, einer Kantenwelligkeit und/oder einer Kantenprofilhöhe, einer Oberflächenrauheit, einer Riefenhöhe und/oder einer Riefenhäufigkeit. Vorteilhafterweise können die Größen, die für das Bearbeitungsergebnis berücksichtigt werden sollen, auch noch vor Ort während der Anwendung konfiguriert werden. Damit kann das Verfahren sehr flexibel gestaltet werden.

Gemäß einer anderen, vorteilhaften Ausführungsform wird das deterministische Prozessmodell verwendet, um ein neuronales Netz zu trainieren.

In einem weiteren Aspekt bezieht sich die Erfindung auf ein Computerprogramm mit Programmcode oder Programmmitteln, wobei das Computerprogramm auf einem computerlesbaren Datenträger gespeichert sein kann, wobei der Programmcode oder die Programmmittel einen Computer veranlassen, ein Verfahren nach dem vorangehend beschriebenen Parametrierverfahren oder Prognoseverfahren auszuführen, wenn das Computerprogramm auf einem Computer oder einer Computer-basierten Verarbeitungseinheit ausgeführt wird.

Vorstehend wurde die Lösung der Aufgabe anhand der Verfahren beschrieben. Dabei erwähnte Merkmale, Vorteile oder alternative Ausführungsformen sind auch auf die anderen beanspruchten Gegenstände zu übertragen und umgekehrt. Mit anderen Worten können auch die gegenständlichen Ansprüche (die beispielsweise auf ein Prognosemodul oder auf ein Parametriermodul gerichtet sind) mit den Merkmalen weitergebildet sein, die in Zusammenhang mit dem Verfahren beschrieben und/oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Moduls ausgebildet und umgekehrt.

In einem weiteren Aspekt bezieht sich die Erfindung auf ein Parametriermodul für eine Laserbearbeitungsmaschine zur automatischen Berechnung eines Parametersatzes zur Parametrierung der Laserbearbeitungsmaschine, wobei das Parametriermodul ausgebildet ist, ein Parametrierverfahren, wie vorstehend beschrieben, auszuführen.

Das Parametriermodul umfasst vorzugsweise eine Schnittstelle, insbesondere eine Netzwerkschnittstelle (z.B. CAN Bus, z.B. gemäß dem ISO 11898 Standard).

In einem weiteren Aspekt bezieht sich die Erfindung auf ein Prognosemodul für eine Laserbearbeitungsmaschine zur automatischen Berechnung eines Prognosedatensatzes für ein Bearbeitungsergebnis, wobei das Prognosemodul ausgebildet ist, ein Prognoseverfahren, wie vorstehend beschrieben, auszuführen.

In einem weiteren Aspekt bezieht sich die Erfindung auf eine Laserbearbeitungsmaschine mit einem (elektronischen) Parametriermodul und/oder mit einem (elektronischen) Prognosemodul.

In einem weiteren Aspekt betriff die Erfindung ein System zum Betreiben einer Laserbearbeitungsmaschine zur Bearbeitung von Werkstücken. Das System kann ausgebildet sein mit:

- Der Laserbearbeitungsmaschine;
- Einer Benutzerschnittstelle zur Ein- und Ausgabe von Daten;
- Einem Speicher zur Speicherung des deterministischen Prozessmodells mit:

  ◦ Einer ersten Datenstruktur, in der eine Menge von Parametersätzen gespeichert ist, wobei die erste Datenstruktur eine Datenschnittstelle zur Laserbearbeitungsmaschine repräsentiert;
  ◦ Einer zweiten Datenstruktur, in der eine Menge von berechneten Prozesskenngrößen gespeichert ist;
  ◦ Einer dritten Datenstruktur, in der eine Menge von Bearbeitungsergebnissen gespeichert ist, wobei die dritte Datenstruktur eine Datenschnittstelle zu einer Messvorrichtung zur Messung von Bearbeitungsergebnissen der Laserbearbeitungsmaschine repräsentiert;

- Einer elektronischen Verarbeitungseinheit, die ausgebildet ist, eine Menge von Modellalgorithmen auf dem deterministischen Prozessmodell auszuführen;
- Einer Datenverbindung zwischen den Datenstrukturen, dem Speicher, der elektronischen Verarbeitungseinheit und der Laserbearbeitungsmaschine.

In einer bevorzugten Ausführungsform der Erfindung umfasst die elektronische Verarbeitungseinheit ein Prognosemodul und/oder das Parametriermodul.

In einer weiteren, bevorzugten Ausführungsform wird das deterministische Prozessmodell einer automatischen Selbstprüfung unterzogen, indem für jeweils eine Eingabe jeweils inverse Modellalgorithmen sequentiell ausgeführt werden, insbesondere ein Applikations-Simulationsalgorithmus und ein Fertigungsprognosealgorithmus und ein Applikations-Kalibrationsalgorithmus und ein Applikationsberechnungsalgorithmus, und überprüft wird, ob ein Ergebnis der sequentiellen Ausführung identisch mit der Eingabe übereinstimmt.

In einer weiteren, bevorzugten Ausführungsform ist die Eingabe ein Parametersatz oder ein SOLL-Wert für das Bearbeitungsergebnis.

Ein wichtiger vorteilhafter Aspekt der mit zumindest einen (oder beiden) der vorgeschlagenen Verfahren berechneten Werte liegt darin, dass unmittelbar während des Betriebs der Laseranlage beim Kunden relevante Analysedaten bereitgestellt werden können. Diese können z.B. zur Auslösung von weiteren Maßnahmen (Veränderung von Einstellwerten etc.) dienen. So ist es beispielsweise möglich, auf Basis von realen Messdaten und/oder dem realen Verhalten/Daten der Laseranlage ein Höhenprofil einer Brennschnittkante (z.B. 15 mm) mit einer Referenzfläche und einer Schlackenanhaftung grafisch darzustellen und in diese Grafik ein Rechteck einzublenden, über deren horizontale Seitenlänge der Verlauf der vertikalen Schnittkantenprofillinie gemittelt wird. Damit kann ein wichtiges Hilfsmittel bereitgestellt werden, um den physikalischen Laserbearbeitungsprozess online und im Betrieb unmittelbar zu analysieren. Insgesamt kann die Qualität der Laserbearbeitung (nicht nur in Bezug auf den Qualitätsparameter der Schnittkante, sondern auch betreffend andere Qualitätsparameter, wie z.B. Schlacke und Grat etc.) verbessert und die Effizienz der notwendigen Einstellungen sowohl erleichtert als auch verbessert werden.

Im Folgenden werden die in dieser Anmeldung verwendeten Begrifflichkeiten in ihrem Bedeutungsgehalt näher erläutert.

Das deterministische Prozessmodell ist ein digitales Objekt, in dem die physikalischen Zusammenhänge zwischen dem jeweiligen Parametersatz und den Prozesskenngrößen, die den physikalischen Laserbearbeitungsprozess in der Prozesszone repräsentieren, und dem Bearbeitungsergebnis modelliert sind. Es sei ausdrücklich daraufhin gewiesen, dass es sich bei dem Prozessmodell nicht um ein statistisches oder stochastisches Modell handelt, sondern um ein Simulationsmodell, in dem die relevanten physikalischen Zusammenhänge der Laserbearbeitung mit unterschiedlichen Qualitätsparametern abgebildet sind und simuliert werden. Das Prozessmodell umfasst nebst den Algorithmen zumindest drei getrennte Datenstrukturen. Die Qualitätsparameter finden sich in der dritten Datenstruktur mit dem Bearbeitungsergebnis wider. Das Prozessmodell umfasst somit eine vollständige Modellierung unterschiedlicher Qualitätsparameter, die nicht nur auf die Qualität der Schnittkante mit Riefenbildung und Bartbildung abstellen, sondern umfassen weitere Qualitätsmerkmale, die weiter unten in Zusammenhang mi der dritten Datenstruktur erläutert werden. Zudem umfasst das Prozessmodell auch den physikalischen Zusammenhang zwischen dem jeweiligen Qualitätsmerkmal oder Bearbeitungsergebnis und dem Parametersatz und den Prozesskenngrößen.

In einer ersten Datenstruktur sind die Bearbeitungsparameter enthalten. Diese Bearbeitungsparameter werden kurz auch mit Parameter bezeichnet. Ein Datensatz der (Bearbeitungs-) Parameter umfasst:

- die Spezifikation des Prozessgases, des Bearbeitungskopfs, des Lasers, der Bearbeitungsmaschine, der Düse, der Optik und des Werkstücks
- die Definition des Bearbeitungsweges (Kontur)
- die Stützpunktdaten entlang des Bearbeitungsweges (Kontur) wie beispielsweise Prozessgasdruck, Vorschub, Laserleistung, Fokuslage, Werkstückdicke und zahlreiche andere mehr.

Die Spezifikationen und der Bearbeitungsweg sind durch die Bearbeitungsinfrastruktur, die vom Anwender definierte konkrete Anwendung (Schneidplan) und dem verwendeten Werkstück bestimmt. Hingegen können die Stützpunktdaten unabhängig davon variiert werden, und sind deshalb sowohl Eingabe des Prognosemoduls als auch Ausgabe des Parametriermoduls sein.

In einer zweiten Datenstruktur sind die Prozesskenngrößen enthalten. Ein Datensatz von Prozesskenngrößen ist genau einem Stützpunkt des Bearbeitungsweges zugeordnet und umfasst u.a. folgende Eigenschaften:

- des Laserstrahlwerkzeugs wie z.B. zeitdurchschnittliche Laserleistung, Fokuslänge (Rayleigh-Länge), Strahlradius an der Werkstückoberfläche;
- der Schnittfuge wie z.B. Querschnittsfläche, durchschnittliche Schnittfugenbreite, durchschnittlicher Konuswinkel;
- der Schnittkante wie z.B. Riefenneigung, Riefenhäufigkeit, Rauheitswerte;
- der Schmelze wie z.B. Filmdicke, Austrittsgeschwindigkeit, Strömungskennzahlen, Oberflächeninhalt, Austrittsquerschnitt;
- des Gasstrahlwerkzeugs wie z.B. Druckkopplungsgrad, Druckverlust (verursacht durch den Bereich zwischen Düse und Werkstück);
- der Optik wie z.B. Magnifikation, leistungsabhängiger Fokuslagenshift;
- des Werkstücks wie z.B. Schnittvolumen mit dem Laserstrahlwerkzeug, Stabilitäts- oder Toleranzwerte der Bearbeitung, Prozesswirkungsgrad.

Die Prozesskenngrößen werden durch die Algorithmen des Prozessmodells berechnet. Eine Ausnahme hiervon bilden zum einen Toleranz- und Stabilitätswerte, die vom Anwender vorgegeben werden, und zum anderen die Prozesskenngrößen, die beim Parametrierverfahren nicht aus dem vorgegebenen Bearbeitungsergebnis berechnet werden können (z.B. Druckkopplungsgrad, Schnittfugenbreite). Die Prozesskenngrößen können Messdaten (IST) als auch Berechnungsdaten (SOLL) enthalten.

In einer dritten Datenstruktur ist das Bearbeitungsergebnis enthalten. Ein Datensatz des Bearbeitungsergebnisses umfasst diejenigen Eigenschaften des gefertigten Teils, welche durch die Bearbeitung verursacht wurden. Dazu gehören z.B. die Grathöhe, die Schlackenhöhe, die Profilhöhe der Schnittkante, die Flächenrauheit, die Riefenhäufigkeit, die Riefenneigung (Nachlauf, Lag). Im deterministischen Prozessmodell ist das Bearbeitungsergebnis zum einen Eingabe des Parametrierverfahrens mit SOLL-Werten des Bearbeitungsergebnis, und zum andern Berechnungsresultat des Prognoseverfahrens mit SOLL-Werten. Die IST-Werte des Bearbeitungsergebnisses werden durch ein geeignetes Oberflächen-Messverfahren ermittelt. Besonders geeignet sind hierzu Messungen der Werkstückunterseite in Schnittfugennähe und Schnittkantenflächen, welche mit berührungslosen optischen 3D-Oberflächen-Messverfahren gemacht werden. Das Vergleichen zwischen einem gemessenen IST-Wert für das Bearbeitungsergebnis einerseits und dem Prognosedatensatz für das Bearbeitungsergebnis andererseits erfolgt entweder software-gesteuert oder über eine Komparatorschaltung, die auf einer elektronischen Verarbeitungseinheit implementiert sein kann. Das Vergleichen erfolgt vollautomatisch und vorzugsweise ohne Benutzerinteraktion. Selbiges gilt für das Vergleichen zwischen einem gemessenen IST-Wert für das Bearbeitungsergebnis einerseits und der vom Anwender eingegebenen SOLL-Vorgabe für das Bearbeitungsergebnis andererseits.

Es wird ein Vergleichsergebnis erfasst. Dabei handelt es sich um einen digitalen Datensatz. Im einfachsten Fall kann es sich um ein binäres Flag handeln, das eine Abweichung signalisiert. Das Vergleichsergebnis wird auf einer Ausgabeeinheit an der Laserbearbeitungsmaschine ausgegeben. Das Vergleichsergebnis kann zur weiteren Verarbeitung an weitere Applikationen transferiert werden, um geeignete Anpassungsmaßnahmen auszulösen.

Der Applikationssimulationsalgorithmus, der Fertigungsprognosealgorithmus, der Applikationskalibrationsalgorithmus und der Applikationsberechnungsalgorithmus können Bestandteil einer Applikation bzw. eines Computerprogramms sein. So kann also z.B. der Applikationssimulationsalgorithmus Bestandteil eines Applikationssimulationsprogramms sein etc. Für weitere Details wird auf die detaillierte Figurenbeschreibung verwiesen.

Unter einem "Algorithmus" bzw. "Programm" wird jede Art von Computerprogramm verstanden, das maschinenlesbare Instruktionen zur Steuerung einer Funktionalität des Computers im Kontext einer Laserbearbeitung umfasst. Das Computerprogramm kann auf einem Datenträger als ausführbare Programmdatei, häufig im sogenannten Maschinencode gespeichert sein, die zur Ausführung in den Arbeitsspeicher des Rechners geladen wird. Das Programm wird als Abfolge von Maschinen-, d. h. Prozessorbefehlen von dem oder den Prozessoren des Computers verarbeitet und damit ausgeführt. Das Programm kann als ausführbarer Code, als Quellcode oder als interpretierter Code vorliegen.

Unter einer "Schnittstelle" wird eine Schnittstelle verstanden, über die Daten empfangen und gesendet werden können (Kommunikationsschnittstelle). Die Kommunikationsschnittstelle kann kontaktbehaftet oder kontaktlos konfiguriert sein. Bei der Kommunikationsschnittstelle kann es sich um eine interne Schnittstelle oder um eine externe Schnittstelle handeln, die beispielsweise mittels eines Kabels oder kabellos mit einem zugeordneten Gerät verbunden ist. Die Kommunikation kann über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann die Kommunikation auch über ein Mobilfunknetz erfolgen.

Unter einem "Speicher" werden hier sowohl flüchtige als auch nichtflüchtige elektronische Speicher bzw. digitale Speichermedien verstanden. Unter einem "nichtflüchtigen Speicher" wird ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben. Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einer (elektronischen) "Verarbeitungseinheit" wird ein Elektronikmodul verstanden, das z.B. als Prozessor zur computerbasierten, automatischen Ausführung von Befehlen ausgebildet sein und eine Logikschaltung zur Ausführung von Programminstruktionen umfassen kann. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden. Die Verarbeitungseinheit kann das Prognosemodul und/oder das Parametriermodul umfassen.

Eine weitere Aufgabenlösung sieht ein Computerprogrammprodukt vor, mit Computerprogrammcode zur Durchführung aller Verfahrensschritte des oben näher beschriebenen Verfahrens, wenn das Computerprogramm auf einem Computer ausgeführt wird. Dabei ist es auch möglich, dass das Computerprogramm auf einem von einem Computer lesbaren Medium gespeichert ist. Das Computerprogrammprodukt kann z.B. als gespeicherte, ausführbare Datei, ggf. mit weiteren Bestandteilen (wie Libraries, Treibern etc.) oder als Computer mit dem bereits installierten Computerprogramm ausgebildet sein.

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigen:

KURZE ÜBERSICHT ÜBER DIE FIGUREN

Fig. 1 eine schematische Übersicht über ein System zur Parametrierung und/oder Prognose für eine Laserbearbeitung auf einer Laserbearbeitungsmaschine, gemäß einer bevorzugten Ausführungsform der Erfindung;

Fig. 2 eine schematische Darstellung eines modellbasierten Prognoseverfahrens;

Fig. 3 eine schematische Darstellung eines modellbasierten Parametrierverfahrens für einen Laser;

Fig. 4 eine Übersichtsdarstellung über ein in eine Laserbearbeitung eingebundenes Parametriermodul;

Fig. 5 eine Übersichtsdarstellung über ein in eine Laserbearbeitung eingebundenes Prognosemodul;

Fig. 6 ein Ablaufdiagramm eines Prognoseverfahrens gemäß einer bevorzugten Ausführungsform der Erfindung;

Fig. 7 ein Ablaufdiagramm eines Parametrierverfahrens gemäß einer bevorzugten Ausführungsform der Erfindung;

Fig. 8 ein Ablaufdiagramm für einen Algorithmus zur Applikations-Kalibration;

Fig. 9 eine schematische Darstellung einer Schnittfuge eines gefertigten Bauteils zur Darstellung eines Konuswinkels;

Fig. 10 ein Ablaufdiagramm für einen Algorithmus zur Applikations-Berechnung gemäß einer bevorzugten Ausführungsform der Erfindung;

Fig. 11 ein Ablaufdiagramm für einen Algorithmus zur Applikations-Simulation gemäß einer bevorzugten Ausführungsform der Erfindung;

Fig. 12 ein Ablaufdiagramm für einen Algorithmus zur Fertigungs-Prognose gemäß einer bevorzugten Ausführungsform der Erfindung und

Fig. 13 eine Grafik zu einem gemittelten Profilverlauf der Profilhöhe der Schnittfläche.

## DETAILLIERTE BESCHREIBUNG VON AUSFÜHRUNGSBEISPIELEN UND DER FIGUREN

Die Erfindung dient dazu, den Betrieb von Laseranlagen zu verbessern und insbesondere zu vereinfachen. Die Einstellung bzw. Parametrierung der Laseranlage erfordert umfangreiches physikalisches Wissen über die Zusammenhänge zwischen den relevanten Größen. So stehen die einzustellenden oder eingestellten Anlagenparameter in mehrdimensional gekoppelter Korrelation zum Bearbeitungsergebnis. Die daraus entstehende Komplexität erschwert oder verunmöglicht ein intuitives Einstellen der Anlagenparameter zur Erzielung eines bestimmten Bearbeitungsresultats. Zudem weiß der Anwender wenig darüber, wie der Bearbeitungsprozess zum Zeitpunkt des Teiledesigns ablaufen wird. Er weiß auch wenig darüber zum Zeitpunkt der Bearbeitung. Durch die fehlende Charakterisierung und Simulationsmöglichkeiten des Prozesses im Stand der Technik ist ein für den Anwender verständliches Prozess-Monitoring schwierig bis unmöglich. Für den Anwender ist es zudem wichtig, dass er bei Vorgabe eines SOLL-Wertes für ein Bearbeitungsergebnis, z.B. mit einer Vorgabe für die Grathöhe bei einem Schmelzschnitt oder einer Schlackenhöhe bei einem Brennschnitt bei den jeweils gefertigten Teilen, weiß, welche Parameter er einstellen muss, damit er das gewünschten Bearbeitungsergebnis erreichen kann.

Ziel der hier vorgeschlagenen Verfahren ist es, die Lasermaterialbearbeitung (Applikation) bei minimaler Dateneingabe so zu steuern, dass die optimale Fertigung resultiert. Die minimale Dateneingabe umfasst die gewünschte Teileform (Schneidplan) und das gewünschte Material (Werkstück) sowie die Spezifikation von Anlage und Werkstoff. Die optimale Fertigung bedeutet die Erreichung eines optimalen Bearbeitungsergebnisses und wird aus mindestens drei Datenstrukturen autonom ermittelt. Mindestens zwei Anwendungsfälle mit je mindestens zwei schnellen Algorithmen legen einen Datenfluss zwischen den mindestens drei Datenstrukturen fest. Die Datenstrukturen, Anwendungsfälle, Algorithmen und der Datenfluss bilden den Digitalen Zwilling der Lasermaterialbearbeitung (Applikation). Der Digitale Zwilling ist modular und nutzt u.a. Erfahrungswerte, um die Algorithmen einfach und schnell zu halten und die Vergleichbarkeit zwischen digitalem Zwilling und realer Lasermaterialbearbeitung (Applikation) zu gewährleisten. Das Modell umfasst zumindest drei Datenstrukturen:

1. Datenstruktur 1 enthält die Daten des Parametersatzes P;
2. Datenstruktur 2 enthält die Prozesskenngrößen PKG;
3. Datenstruktur 3 enthält die Daten des Bearbeitungsergebnisses E;

Die Datenstruktur 1 bildet die Datenschnittstelle zwischen dem Digitalen Zwilling der Lasermaterialbearbeitung und der realen Bearbeitungs-Anlage L. Die Datenstruktur 3 bildet die Datenschnittstelle zwischen dem Digitalen Zwilling der Lasermaterialbearbeitung und dem Bearbeitungsergebnis E der realen Lasermaterialbearbeitung (Applikation). Die mindestens drei Datenstrukturen werden in Abhängigkeit der minimalen Dateneingabe, beinhaltend Schneidplan (Anwender Eingabe) und Werkstückspezifikationen (Material, Dicke, Größe aus Datenbank), Erfahrungswerte (Durchschnitte gesammelter Messwerte der verschiedenen Kategorien; aus Datenbank) und/oder aktuellen Messwerten (aus Datenbank) als Messgrößen oder Berechnungsgrößen initialisiert, und ggf. weiterer Spezifikationsdaten (aus Datenbank) initialisiert. Vorteilhaft gegenüber bekannten Methoden aus dem Stand der Technik ist, dass nun auch Erfahrungswerte in ein Modell (hier: digitaler Zwilling) einfließen können.

Die Daten der mindestens drei Datenstrukturen sind in einem Datenbanksystem (z.B. in Tabellenform) abgespeichert. Die Algorithmen der Anwendungsfälle 1 und 2 lesen die Daten aus den Tabellen oder schreiben sie in die Tabellen. Dazu verwenden die Algorithmen ein gemeinsames Datenschnittstellenobjekt, um die Lese- und Schreiboperationen auf dem Datenbanksystem auszuführen. Die Algorithmen selbst speichern die Daten für die jeweiligen Berechnungen in den Klasseninstanzen des Digitalen Zwillings. Das Datenbanksystem und die Klassen des Digitalen Zwillings sind dabei vorteilhafterweise objektorientiert aufgebaut und in einem Klassendiagramm festgeschrieben.

In einer bevorzugten Ausführungsform der Erfindung sind mindestens zwei Anwendungsfälle vorgesehen:

1. Der Anwendungsfall 1 ist die sequentielle Ausführung

    a. des Algorithmus der Applikations-Kalibration, welcher die Werte des Bearbeitungsergebnisses E (Datenstruktur 3) in die Prozesskenngrößen PKG (Datenstruktur 2) abbildet und
    b. des Algorithmus der Applikations-Berechnung, welcher die Prozesskenngrößen PKG (Datenstruktur 2) in den Parametersatz P (Datenstruktur 1) abbildet.

2. Der Anwendungsfall 2 ist die sequentielle Ausführung

    a. des Algorithmus der Applikations-Simulation, welcher den Parametersatz P (Datenstruktur 1) in die Prozesskenngrößen PKG (Datenstruktur 2) abbildet und
    b. des Algorithmus der Fertigungs-Prognose, welcher die Prozesskenngrößen PKG (Datenstruktur 2) in das Bearbeitungsergebnis E (Datenstruktur 3) abbildet.

Im Folgenden werden die 3 Datenstrukturen näher erläutert.

Die Datenstruktur 1 mit dem Parametersatz P für die Lasermaterialbearbeitung enthält die Parameterdaten, welche definitionsgemäß alle Einflussgrößen der Lasermaterialbearbeitung (Applikation) enthalten. Das bedeutet, dass die Gesamtheit der Daten in der Datenstruktur 1 die digitalisierten Parameterdaten bzw. den Bearbeitungs-Zustand vor, während und nach einer Teilefertigung definiert. Damit ist die Datenstruktur 1 die digitale Abbildung der realisierten Lasermaterialbearbeitung auf der gegebenen Anlage. Sie hat die Funktion einer Datenschnittstelle zwischen der Bearbeitungsanlage und dem Digitalen Zwilling. Die Einflussgrößen der Datenstruktur 1 sind weiter unterteilt. Sie können zumindest folgende drei Sub-Datenstrukturen des Parametersatzes (im Folgenden auch als 'Bearbeitungs-Zustand' bezeichnet) umfassen:

Spezifikation:

Die Spezifikationen der Fertigungsanlage, der Laserquelle, des Bearbeitungskopfes, des Werkstücks sowie weiterer beeinflussenden Komponenten:
Beispiele sind spezifizierte Maximalwerte für Vorschub oder Prozessgasdruck, ferner die Wellenlänge des Lasers oder auch Materialbezeichnungen des Werkstücks.

Kontur:

Geometrische Form der Teilekontur als Einzelteil oder als Schneidplan: Beispiele sind Längen, Winkel, Krümmungen, Drehsinn oder Koordinaten ausgezeichneter Punkte auf der Kontur.

Punktdaten:

Alle über die Teilekontur veränderlichen Prozessparameter des Werkstücks, der Anlage und ihrer Komponenten: Beispiele sind Laserleistung, Vorschub, Prozessgasdruck, Düsenabstand, Fokuslage, aber auch veränderliche Werkstückeigenschaften wie Dicke oder Temperatur.

Die Datenstruktur 2 (des Digitalen Zwillings der Lasermaterialbearbeitung) enthält die Prozesskenngrößen PKG, die alle wesentlichen geometrischen und physikalischen Eigenschaften der Prozesszone und des Bearbeitungsprozesses umfasst. Die Gesamtheit der Daten in der Datenstruktur 2 repräsentieren die dynamischen Vorgänge, welche in der Prozesszone wechselwirken und die Eigenschaften der Schmelze und der resultierenden Schnittfuge in Zahlen angeben. Hinzu kommen Produktivitätskennzahlen, sicherheitsrelevante Größen (z.B. Anteil Strahlungsverlust) und Stabilitäts- oder Toleranzgrößen. Die Prozesskenngrößen sind das Resultat von Berechnungen der entsprechenden Algorithmen der Anwendungsfälle 1 und 2 über die Teilekontur. Die wichtigsten Vorteile der Prozesskenngrößen sind:

- Als rein rechnerische Größen beschreiben sie die intrinsischen Eigenschaften der Prozesszone ohne Einfluss von Variationen in Messdaten, sind also 100 % reproduzierbar.
- Die Prozesskenngrößen enthalten Größen, die einerseits zwar einer direkten Messung nicht oder nur schwer zugänglich sind, andererseits jedoch das Bearbeitungsergebnis direkt beeinflussen, was eine starke Korrelation mit dem Fertigungs-Resultat bedeutet.
- Die Prozesskenngrößen stehen in einem theoretisch formalen und nichtempirischen Zusammenhang sowohl mit dem Parametersatz als auch mit dem Bearbeitungsergebnis.

Die Prozesskenngrößen umfassen zumindest folgende sechs Sub-Datenstrukturen:

Strahlwerkzeug:

Berechnete Größen zu dem in das Werkstück fokussierten Laserstrahl: Dazu gehören beispielsweise die Rayleigh-Länge, die durchschnittliche Laserleistung und/oder der Strahlradius an der Werkstückoberkante.

Schnittfuge:

Geometrische Kenngrößen der Schnittfuge, wie z.B. der durchschnittliche Neigungswinkel der Schnittfront und/oder diverse Fugenbreiten.

Schmelzfilm:

Geometrische Kenngrößen und strömungsmechanische Kennzahlen der Schmelze wie z.B. ihre Austrittsdicke oder die Péclet-Zahl, aber auch deren Austrittsgeschwindigkeit, ferner Sollwerte des auf der Schmelzdynamik basierenden Bearbeitungsergebnisses.

Düse:

Enthält geometrische Eigenschaften des Raumes zwischen der Düse und der Prozesszone, insbesondere aber auch die Druckkopplungseffizienz.

Optik:

Berechnungsresultate für die Magnifikation und zum leistungsabhängigen Fokusshift.

Werkstück:

Diverse Kenngrößen im Zusammenhang mit dem gegeben Werkstoff, z.B. die benötigte Schneidleistung, Streckenenergie, Prozesswirkungsgrad und/oder Stabilitätsparameter.

Die dritte Datenstruktur 3 umfasst das Bearbeitungsergebnis. Das Bearbeitungsergebnis umfasst alle Daten, die zum Ergebnis der Bearbeitung gehören. Technisch gesehen sind die Werte bzw. Größen des Bearbeitungsergebnisses das Resultat der Antwortfunktion sowohl der digitalisierten als auch der realisierten Teilefertigung. Dazu gehören:

- Die am gefertigten Bauteil gemessenen Qualitätsmessgrößen (z.B. Grat oder Schlacke);
- Die während der Bearbeitung gemessenen Kinematik-Messgrößen (anlageninterne Messung des effektiv gefahrenen Parameterdatensatzes);
- Die während der Bearbeitung aufgenommenen Prozesssignale;
- Die durch den Algorithmus der Fertigungs-Prognose berechneten Qualitätsprognosen.

Analog zur Datenstruktur 1 ist auch die Datenstruktur 3 ein digitales Abbild, nämlich dasjenige des gefertigten Bauteils und dessen Qualität (Bearbeitungsergebnis).

Weiterhin und analog zur Datenstruktur 1 fungiert auch das Bearbeitungsergebnis als Datenschnittstelle zwischen den Messwerten und Signalen der Teilefertigung und des Digitalen Zwillings.

| Qualitätsgrösse | Schmelzschnitt | Brennschnitt |
|---|---|---|
| Gratamplitude | X | |
| Schlackenamplitude | | X |
| Schnittkantenprofilhöhe | X | X |
| Flächenrauheit | X | |
| Riefenamplitude | | X |
| Riefenfrequenz | | X |
| Riefennachlauf | X | X |

Erfindungsgemäß wird ein deterministisches Prozessmodell bereitgestellt, das in den Figuren mit den Bezugszeichen M gekennzeichnet ist und das in einem Speicher, wie z.B. in einer Datenbank DB abgelegt sein kann. Auf Basis dieses Prozessmodells kann eine Art digitaler Zwilling für die reale Laserbearbeitung bzw. die damit verbundenen physikalischen Prozesse bereitgestellt werden.

Die Erfindung wird im Folgenden unter Bezugnahme auf die Figuren näher und mit mehreren Ausführungsbeispielen erläutert.

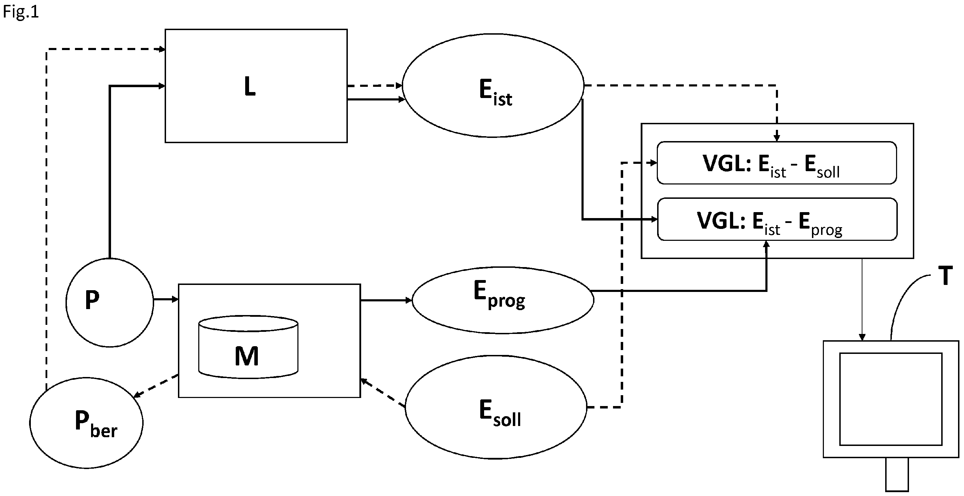

**Fig. 1** zeigt eine Laseranlage L, die über eine elektronische Verarbeitungseinheit V, z.B. einen Steuercomputer oder eine mikroprozessor-basierte Schaltung (z.B. FPGA oder ASIC oder andere integrierte Schaltkreise) gesteuert wird. In dieser Verarbeitungseinheit V ist das Prozessmodell M ausführbar gespeichert. Die Verarbeitungseinheit V kann auch ausgebildet sein, unterschiedliche Algorithmen auszuführen, die im Folgenden noch detaillierter beschrieben werden.

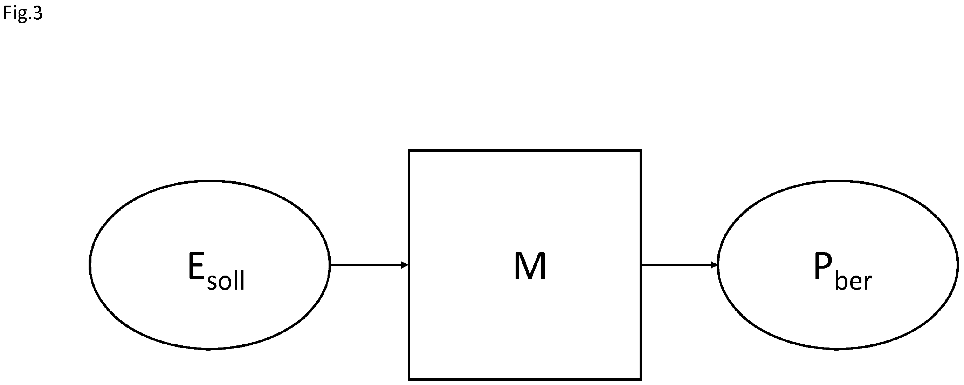

In einem ersten Anwendungsfall, der in **Fig. 3** und in Fig. 1 gezeigt ist, wird ein SOLL-Wert für ein gewünschtes Bearbeitungsergebnis $E_{soll}$ vom Anwender eingegeben oder der Soll-Wert wird aus einer Datenstruktur oder einer Nachricht erfasst. Aus diesem Soll-Wert für das Bearbeitungsergebnis $E_{soll}$ wird - wie in Fig. 3 gezeigt - unter Zugriff auf das Modell M ein Parameterdatensatz $P_{ber}$ berechnet, der an der Laseranlage L einzustellen ist, damit der Soll-Wert erreicht werden kann.

Dieser erste Anwendungsfall ist in Fig. 1 mit gestrichelten Linien dargestellt. Rechts unten beginnend, wird der Soll-Wert $E_{soll}$ erfasst und dem Modell M übermittelt, das unter Anwendung von Algorithmen daraus einen Parametersatz $P_{ber}$ berechnet. Dieser berechnete Parametersatz $P_{ber}$ kann in einem nachfolgenden Verfahren an die Laseranlage L zur Steuerung übergegen werden. Nachdem weitere relevante Größen (z.B. Schneidplan und Werkstückbezogenen Daten) eingegeben worden sind, wird der Laser L betrieben. Anschließend wird das Bearbeitungsresultat am gefertigten Bauteil bzw. Werkstück gemessen. Dies wird im gemessenen Bearbeitungsergebnis Eist erfasst. Nun kann optional eine elektronische Analyse, insbesondere ereignis- und/oder zeitgesteuert eine weitere Analyse ausgeführt werden. Insbesondere kann nun ein Vergleich zwischen dem tatsächlich gemessenem Bearbeitungsergebnis Eist und dem ursprünglich vom Anwender vor- bzw. eingegebenen SOLL-Wert $E_{soll}$ ausgeführt werden. Das Vergleichsergebnis VGL1 wird ausgegeben, vorzugsweise auf einem Monitor oder einem Terminal T des Lasers L und/oder zur Einleitung von weiteren Schritten verwendet. Insbesondere kann der Vergleichswert zur Regelung des Laserbearbeitungsverfahrens verwendet werden. Beispielsweise kann mit dem ermittelten Vergleichswert VGL1 ein neuer Sollwert für das gewünschte Bearbeitungsergebnis ermittelt werden:

$$E_{soll,neu} = E_{soll} + VGL_1$$

Diese Anpassung des SOLL-Wertes kann durch einen Schwellenwert von VGL1 gesteuert werden.

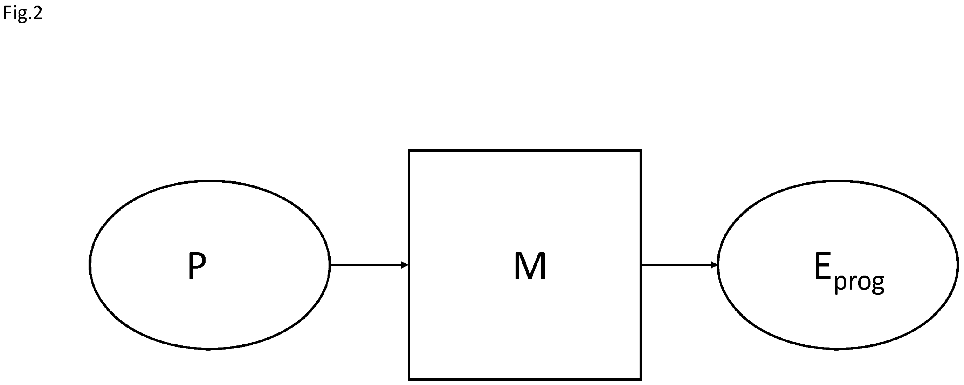

Ein zweiter Anwendungsfall ist schematisch in **Fig. 2** dargestellt. Hier soll der umgekehrte Fall berechnet werden. Aus einem gegebenen Parameterdatensatz P wird unter Zugriff auf das Modell M ein Prognosedatensatz für das Bearbeitungsergebnis $E_{prog}$ erstellt.

In Fig. 1 ist dies beginnend mit der Eingabe des Parametersatzes P repräsentiert, der dem Modell M zugeführt wird, so dass eine Prognose für das bei den Anlagenparametern P erzeugte Ergebnis $E_{prog}$ erstellt werden kann. Entsprechend dem oben bei Anwendungsfall 1 geschilderten Vergleichsverfahren, kann anschließend auch bei Anwendungsfall 2 ein Vergleichswert VGL2 zwischen dem gemessenen IST-Wert für das Bearbeitungsergebnis $E_{ist}$ und dem prognostizierten Wert $E_{prog}$ berechnet werden. Dieser Vergleichswert VGL2 wird auf dem Terminal T ausgegeben.

Bezüglich dem Vergleichswert VGL2 liegt der technische Vorteil darin, dass eine reproduzierbare Abweichung zu einer Verfeinerung bzw. Kalibrierung des Modells verwendet werden kann. Vorzugsweise wird bei Detektion einer solchen reproduzierbare Abweichung automatisch ein Versionsschritt zur Erzeugung eines kalibrierten Modells M' initiiert. Dies ist in Fig. 1 und Fig. 2 durch die durchgezogene Linie von dem Vergleich VGL2 zu dem Modell M repräsentiert, die in dünnerer Strichstärke gezeichnet ist, um zu kennzeichnen, dass dies optional, aber eine bevorzugte Weiterbildung der Erfindung ist. In dieser bevorzugten Ausführungsform der Erfindung kann somit der Vergleichswert VGL2 verwendet werden, um das Modell M automatisch zu kalibrieren. Weiterhin kann eine zeitliche und/oder statistische Auswertung erfolgen, in welchen Bearbeitungsphasen des Lasers keine Abweichung und in welchen Phasen eine Abweichung identifiziert worden ist. Falls z.B. in einer anfänglichen Phase keine SOLL-IST Abweichung bestand, aber in einer späteren Phase eine Abweichung festgestellt worden ist, kann dies möglicherweise einen Fehler indizieren und/oder auf eine graduelle Verschmutzung der Fokussieroptik und/oder auf eine sonstige Abnutzung (z.B. an der Spitze der Prozessgasdüse) hindeuten.

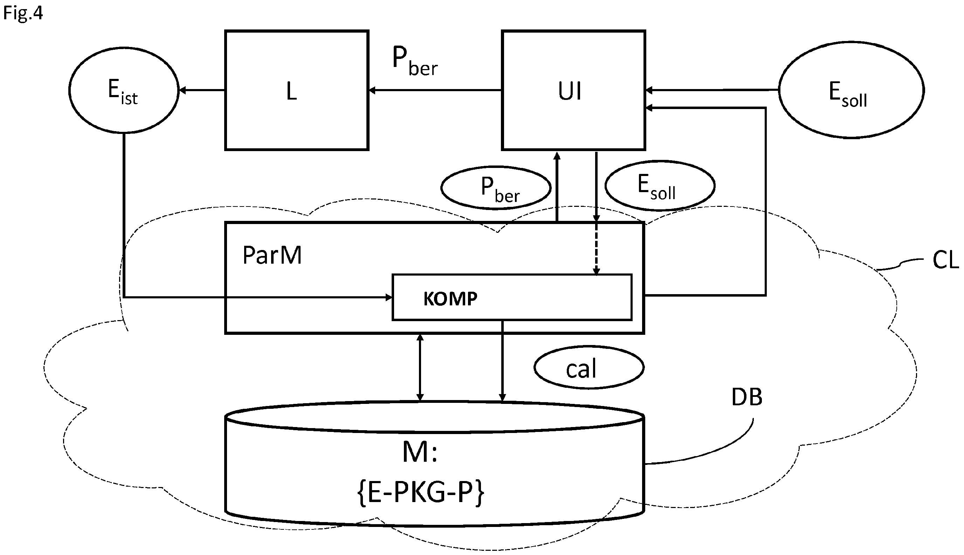

In Zusammenhang mit **Fig. 4** wird im Folgenden die Arbeitsweise eines Parametriermoduls ParM in einem Ausführungsbeispiel erläutert. Das Parametriermoduls ParM kann auf der elektronischen Verarbeitungseinheit V implementiert sein und dient zur Umsetzung des ersten Anwendungsfalls, der oben unter Bezugnahme auf Fig. 3 beschrieben worden ist. Dieses Modul soll den Anwender an der Laseranlage L bei dessen Einstellung und Parametrierung unterstützen. Dazu gibt er eine SOLL-Vorgabe für das Bearbeitungsergebnis $E_{soll}$ auf einem angeschlossenen Terminal T ein, auf dem eine Benutzerschnittstelle UI bereitgestellt sein kann. Dieser Datensatz wird an das Parametriermodul ParM weitergeleitet über eine entsprechende Datenanbindung. Das Parametriermodul ParM greift dann mit den entsprechenden Algorithmen, die nachfolgend genauer erläutert werden, auf das in einer Datenbank DB gespeicherte Modell M zu, um für den SOLL-Wert $E_{soll}$ den Parametersatz $P_{ber}$ zu berechnen. Dieser kann auf der Benutzerschnittstelle UI ausgegeben werden und bei Erfassen eines Verifikationssignals kann dieser berechnete Parametersatz $P_{ber}$ direkt an den Laser L zur Steuerung des Laserprozesses übermittelt werden.

Fakultativ kann in einem nachfolgenden Zeitraum eine zusätzliche Überprüfung des Modells M ausgeführt werden. Dies kann durch einen Komparatorbaustein KOMP mittels eines Vergleichs erfolgen. Dazu wird ein Bearbeitungsergebnis Eist an den mit dem Parametersatz gefertigten Bauteilen gemessen und dem Komparator KOMP übermittelt. Der Komparator KOMP hat ebenfalls Zugriff auf den vom Anwender eingegebenen Sollwert $E_{soll}$ und kann diese beiden Datensätze vergleichen. Das Vergleichsergebnis wird ausgegeben, z.B. auf der Benutzerschnittstelle UI. Falls das Vergleichsergebnis eine Abweichung signalisiert, kann dies automatisch eine Korrekturmaßnahme triggern.

Wie in Fig. 4 durch die geschwungenen Linie CL angedeutet, müssen die vorstehend genannten Bauteile nicht notwendigerweise direkt auf der Laseranlage L implementiert sein. Vorzugsweise ist die Benutzerschnittstelle UI auf oder an der Laseranlage L angeordnet und die elektronischen Verarbeitungseinheiten, wie das Parametriermodul ParM, der Komparator KOMP und/oder das in der Datenbank DB Modell M können als verteiltes System und auf unterschiedlichen Plattformen bereitgestellt werden. Weiterhin können alle oder ausgewählte Bauteile auch auf einem zentralen Server S oder in einer Cloud CL als Dienst bereitgestellt werden, auf den über eine Netzwerkverbindung zugegriffen werden kann.

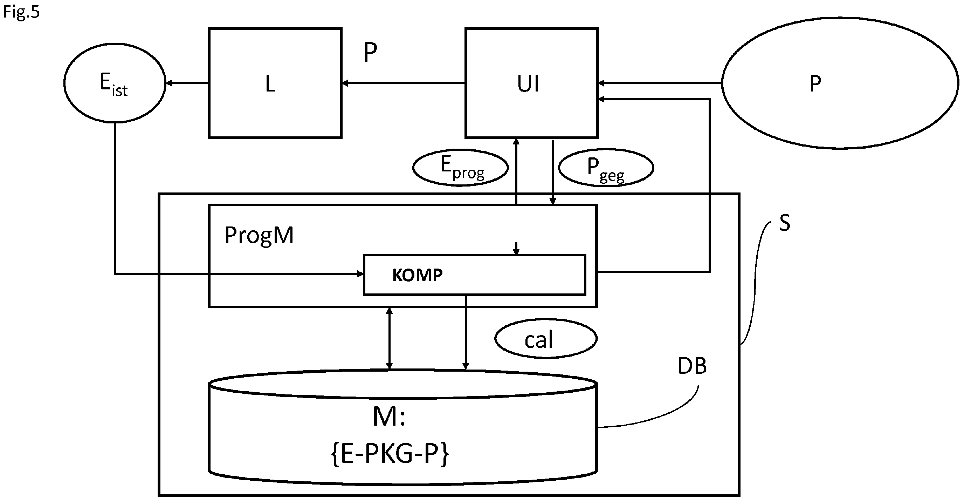

Im Folgenden wird unter Bezugnahme auf **Fig. 5** die Arbeitsweise eines Prognosemoduls ProgM beispielhaft erläutert. Das Prognosemoduls ProgM dient zur Umsetzung des zweiten Anwendungsfalls, der oben unter Bezugnahme auf Fig. 2 beschrieben worden ist. Das Vorgehen für das Prognosemodul ProgM entspricht im Wesentlichen demjenigen, das vorstehend unter Bezugnahme auf Fig. 4 bereits beschrieben worden ist. Nur die Eingabe (eine vom Anwender bestimmte oder aus einer Datenquelle eingelesene Parametrierung P) und die Ausgabe (eine berechnete Prognose für das Bearbeitungsergebnis Eprog) sind getauscht.

Das Prognosemodul ProgM berechnet unter Zugriff auf die entsprechenden Algorithmen aus dem eingegebenen Parametersatz P eine Prognose $E_{prog}$. Das berechnete Ergebnis $E_{prog}$ wird auf der Benutzerschnittstelle UI angezeigt.

Wie oben erläutert, kann der Laser nun real mit der Parametrierung P betrieben werden.

In einer späteren Phase kann das Bearbeitungsergebnis für diese Parametrierung P gemessen und dem Komparator KOMP zum Vergleich mit der berechneten Prognose $E_{prog}$ zugeleitet werden. Bei Abweichung kann dies auf der Benutzerschnittstelle UI ausgegeben werden, um dem Anwender beispielsweise die Gelegenheit zu geben, eine modifizierte Parametrierung zu finden. Darüber hinaus können auf Basis des Vergleichs weitere Schritte ausgelöst werden. Insbesondere kann bei Feststellen einer reproduzierbaren Abweichung eine Anpassung des Modells M vorgenommen werden und als neue Version getestet und in Betrieb genommen werden.

Wie in dem in Fig. 5 dargestellten Ausführungsbeispiel gezeigt, können die elektronischen Verarbeitungseinheiten ProgM, DB auf einem zentralen Server S bereitgestellt werden. Diese Variante gilt auch für das Parametriermodul ParM aus Fig. 4. Ebenso gelten die in Zusammenhang mit Fig. 4 geschilderten Varianten (cloudbasierte Lösung) auch für das Prognosemodul ProgM.

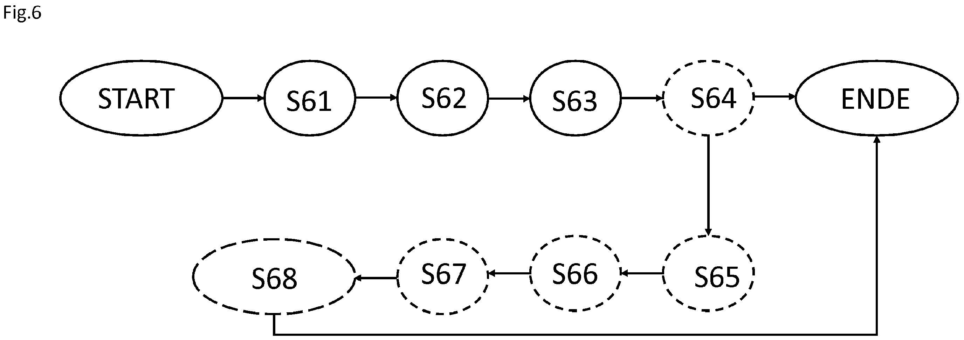

**Fig. 6** ist ein Ablaufdiagramm eines Prognoseverfahrens, das in unterschiedlichen Ablaufvarianten ausgeführt werden kann. Nach dem Start des Prognoseverfahrens, das auf dem Prognosemodul ProgM ausgeführt werden kann, werden in Schritt S61 die Daten für den Parametersatz P eingelesen, der zur Ansteuerung der Laserbearbeitungsmaschine L dienen soll. In Schritt S62 wird auf das deterministische Prozessmodell M zugegriffen, um in Schritt S63 für den eingelesenen Parametersatz P den Prognosedatensatz E$_{prog}$ für das Bearbeitungsergebnis zu berechnen. In Schritt S64 kann fakultativ das Berechnungsergebnis E$_{prog}$ auf einer Benutzerschnittstelle UI angezeigt werden, um dem Anwender direkt die Änderung seiner Eingabe zu ermöglichen.

In einer Weiterbildung kann in Schritt S 65 die Laserbearbeitung mit dem eingelesenen und möglicherweise bestätigten Parametersatz P ausgeführt werden. Nachfolgend kann in Schritt S66 das Bearbeitungsergebnis E$_{ist}$ als IST-Wert am gefertigten Bauteil gemessen werden, um in Schritt S67 mit dem Prognosedatensatz E$_{prog}$ auf Übereinstimmung und Abweichung verglichen zu werden. Bei Abweichung kann der berechnete Vergleichswert in Schritt S68 ausgeben werden (z.B. auf der UI) und/oder auf Basis des berechneten Vergleichswertes können automatisch Anpassungsprozeduren ausgelöst werden, insbesondere kann bei Feststellen einer reproduzierbaren Abweichung eine Anpassung des Modells M vorgenommen werden und als neue Version getestet und in Betrieb genommen werden. Da die Schritte S64, S65, S66, S67, S68 fakultativ sind, sind diese in Fig. 6 gestrichelt umrandet dargestellt.

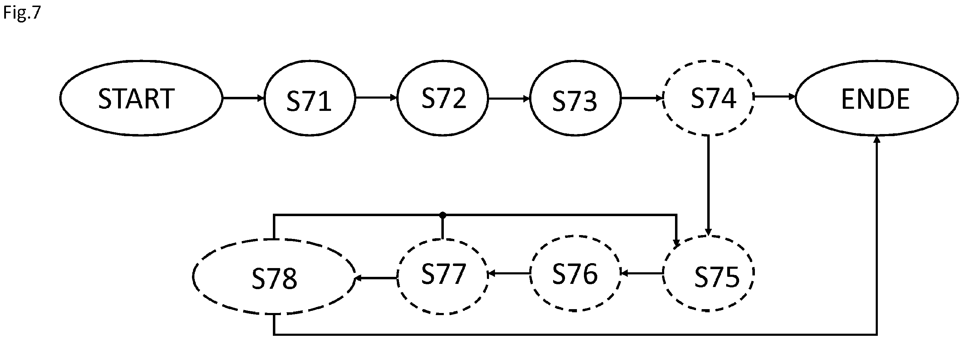

**Fig. 7** zeigt ein Ablaufdiagramm eines Parametrierverfahrens, das in unterschiedlichen Ablaufvarianten ausgeführt werden kann. Nach dem Start des Verfahrens erfolgt in Schritt S71 das Einlesen eines SOLL-Wertes für ein Bearbeitungsergebnis E$_{soll}$. In Schritt S72 wird auf das deterministische Prozessmodell M zugegriffen, um für den eingelesenen SOLL-Wert E$_{soll}$ in Schritt S73 zumindest einen Parametersatz P$_{ber}$ zu berechnen. Fakultativ kann der berechnete Parametersatz P$_{ber}$ in Schritt S 74 z.B. auf der UI Interface ausgegeben werden.

In Schritt S75 kann optional ein Werkstück mit dem berechneten Parametersatz P$_{ber}$ bearbeitet werden. In Schritt S76 kann am gefertigten Werkstück ein IST-Wert für das Bearbeitungsergebnisses E$_{ist}$ gemessen werden. In Schritt S76 kann der Vergleich zwischen SOLL-Wert E$_{soll}$ und IST-Wert Eist für das Bearbeitungsergebnis berechnet werden. Bei Abweichung kann in Schritt S78 der berechnete Vergleichswert ausgegeben werden. Alternativ oder kumulativ können auf Basis des berechneten Vergleichswertes Anpassungsprozeduren getriggert und ausgeführt werden. Insbesondere: das Anpassen des eingelesenen SOLL-Wertes E$_{soll}$, so dass der gemessene IST-Wert für das Bearbeitungsergebnis E$_{ist}$ eingehalten werden kann. In Übereinstimmung mit Fig. 6 sind die fakultativen Schritte in Fig. 7 ebenfalls gestrichelt umrandet dargestellt.

Das Verfahren verfügt über mindestens zwei Anwendungsfälle, die je mindestens zwei sequentiell auszuführende Algorithmen enthalten. Die Algorithmen des ersten Anwendungsfalls sind die Applikations-Kalibration (Algorithmus 1) und die Applikations-Berechnung (Algorithmus 2). Die Algorithmen des zweiten Anwendungsfalls sind die Applikations-Simulation (Algorithmus 3) und die Fertigungs-Prognose (Algorithmus 4). Die beiden Anwendungsfälle bilden die inverse Abbildung zueinander, woraus folgt, dass die sequentielle Ausführung von Algorithmus 1 bis 4 die Identitätsabbildung ergibt und eine Selbstprüfung des Digitalen Zwillings ermöglicht.

Nachfolgend werden die Algorithmen der Anwendungsfälle näher beschrieben. Die Applikations-Kalibration ist der funktionale Zusammenhang zwischen allen Größen des Bearbeitungsergebnisses (Datenstruktur 3) der Lasermaterialbearbeitung (Applikation) und den Prozesskenngrößen (Datenstruktur 2). Dieser funktionale Zusammenhang basiert auf den Messwerten, die zum Zeitpunkt nach der Bearbeitung (ex-situ) erfasst werden. Die Applikations-Kalibration kann empirische (statistische) oder berechnete (theoretische) Funktionen enthalten.

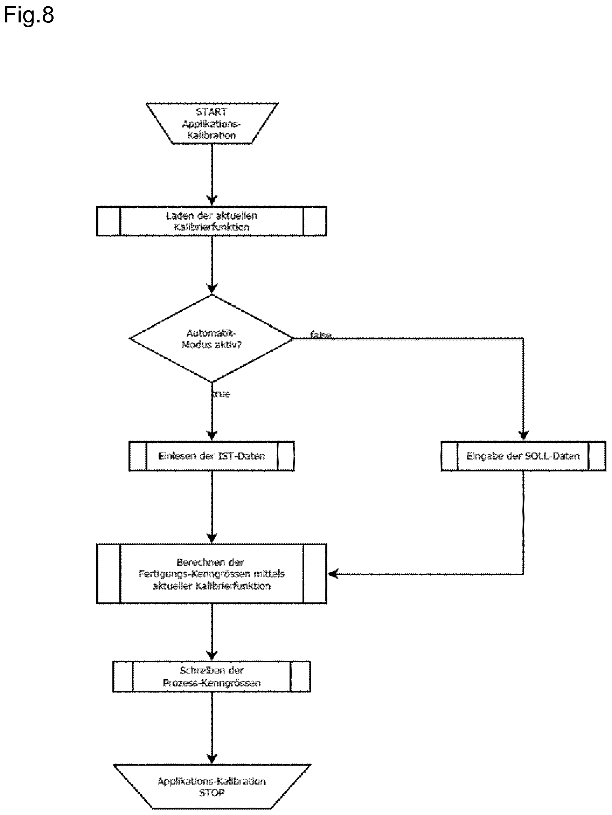

Der Algorithmus der Applikations-Kalibration ist in **Fig. 8** in einem Flussdiagramm dargestellt. Dieser Algorithmus berechnet die entsprechenden Prozesskenngrößen PKG aus dem SOLL-Bearbeitungsergebnis in Datenstruktur 3, welches beispielsweise vom Anwender eingegeben wurde.

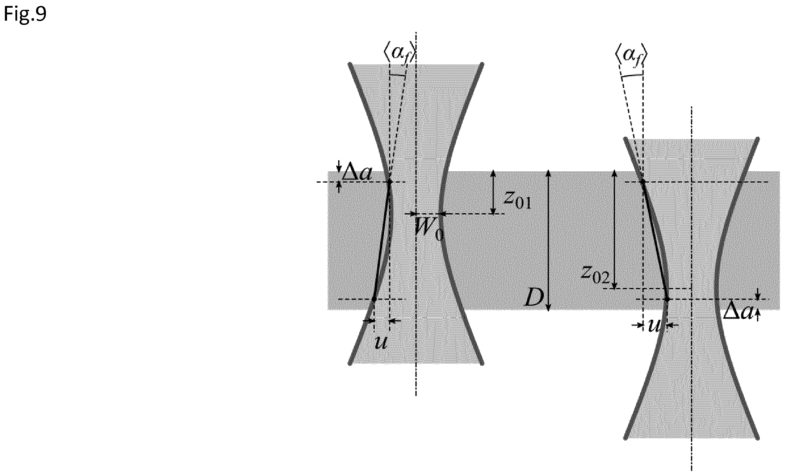

Ein Anwendungsbeispiel für den Applikations-Kalibrationsalgorithmus wird nachfolgend unter Bezugnahme auf **Fig. 9** näher beschrieben.

In Fig. 9 sind zwei Laserstrahlen gezeichnet, welche mit unterschiedlicher Fokuslage in das Werkstück fokussiert werden. Daraus resultiert eine unterschiedliche Neigung der Fugenwände, welche mit dem Durchschnittswert des Neigungswinkels $\langle\alpha_f\rangle$ der Schnittfläche bezeichnet wird. Der Neigungswinkel ist bestimmt durch die Kalibrations-Funktion

$$\tan\langle\alpha_f\rangle = \frac{u}{D - 2\Delta a}$$

Darin ist die Werkstückdicke *D* vorgegeben, die Verkürzung Δ*a* der Fugenhöhe ist in der Norm definiert, und die Schnittkanten-Profilhöhe u ist ein Wert des Bearbeitungsergebnisses (als IST-Wert vom zugehörigen Messverfahren, als SOLL-Wert vom Anwender). In der Modellannahme sei u zugleich die Differenz der Strahlradien an den Enden der verkürzten Fugenhöhe:

$$u = W(\Delta a) - W(D - \Delta a)$$

Die Strahlradienfunktion ist dabei gegeben durch

$$W(z) = W_0 \cdot \sqrt{1 + \left(\frac{z - z_0}{z_R}\right)^2}$$

mit dem Fokusradius $W_0$ und der Fokuslänge $z_R$.

Gemäß dem Flussdiagramm der Applikations-Kalibration werden nun die folgenden Schritte abgearbeitet:

1. der Anwender gibt die gewünschte Schnittkanten-Profilhöhe u als Bearbeitungsergebnis (SOLL-Wert) vor (oder u wird im "Automatik-Modus" als aktueller Messwert für die Anwendung aus der Datenstruktur 3 gelesen);
2. der Algorithmus der Applikations-Kalibration berechnet mittels obenstehender Kalibrations-Funktion die Prozesskenngröße $\langle \alpha_f \rangle$;
3. der Algorithmus schreibt den berechneten Wert von $\langle \alpha_f \rangle$ in die Datenstruktur 2 der Prozesskenngrößen.

Das deterministische Modell stellt im Algorithmus der Applikations-Kalibration für jede weitere Größe des Bearbeitungsergebnisses eine Kalibrations-Funktion bereit.

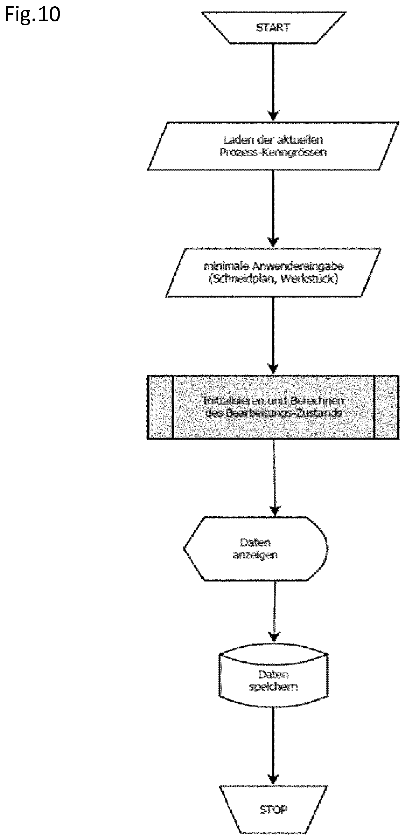

Der Algorithmus der Applikationsberechnung ist in **Fig. 10** in einem Flussdiagramm dargestellt. Demzufolge werden zunächst die im vorhergehend ausgeführten Algorithmus der Applikations-Kalibration berechneten Bearbeitungsergebnisgrößen geladen. Anschließend müssen die Angaben zu Schneidplan und Werkstück eingegeben werden. Dies geschieht in der Regel durch den Anwender oder durch die vorangeschaltete Steuerungseinheit im automatisierten Fertigungsfluss.

Im zentralen Vorgang der Applikations-Berechnung wird der Parametersatz P berechnet. Insbesondere werden die variablen Bearbeitungsparameter (z.B. Vorschub, Leistung, Druck, Fokuslage) berechnet, weil ein Großteil der Datenstruktur 2 mit dem Parametersatz P bereits durch die Spezifikationen und die Daten der minimalen Anwendereingabe gegeben sind.

Ist die Applikations-Berechnung abgeschlossen, werden die Daten angezeigt und gespeichert, und die Fertigung wird entweder gestartet oder verändert. In einer bevorzugten Weiterbildung können die Fertigung bzw. der aktuelle Laserbearbeitungsprozess auf Basis der berechneten Werte geregelt werden, indem die berechneten Parameter manuell oder automatisch während der Bearbeitung verändert werden. Die Veränderung erfolgt in Antwort auf den SOLL-IST-Vergleich unter Zugriff auf das Modell M.

Der Algorithmus der Applikations-Berechnung wird im Folgenden anhand eines Anwendungsbeispiels: ‚Neigungswinkel der Schnittfläche' näher beschrieben.

Im Abschnitt zum Algorithmus der Applikations-Kalibration wurde exemplarisch gezeigt, wie aus dem Bearbeitungsergebnis u (Profilhöhe als Maß für die Ebenheit der Schnittfläche) die Prozesskenngröße af (durchschnittlicher Neigungswinkel der Schnittfläche) berechnet wird.

Die Applikations-Berechnung lädt nun den berechneten Konuswinkel af der Schnittfuge und alle anderen aktuellen Prozesskenngrößen und berechnet daraus den Parametersatz P, insbesondere die variablen Bearbeitungsparameter der Fertigung. Für das Beispiel des durchschnittlichen Neigungswinkels der Schnittfläche liefert die transzendente Gleichung

$$\sqrt{1 + \left(\frac{\Delta a - z_0}{z_R}\right)^2} - \sqrt{1 + \left(\frac{D - \Delta a - z_0}{z_R}\right)^2} - \frac{D - 2\Delta a}{W_0} \cdot \tan\langle \alpha_f \rangle = 0$$

die gesuchte Fokuslage z_0 als Größe des Parametersatzes. An der anschließend geschnittenen Probe kann u erneut gemessen (als Eist) und überprüft werden.

Der Anwendungsfall 2 des Verfahrens umfasst die Applikations-Simulation, gefolgt von der Fertigungsprognose. Der Anwendungsfall 2 ist die inverse Funktion des Anwendungsfalls 1, bestehend aus der Applikations-Kalibration, gefolgt von der Applikations-Berechnung. Daraus ergibt sich als Konsequenz, dass Applikations-Kalibration und Fertigungs-Prognose zueinander inverse Algorithmen darstellen, ebenso wie Applikations-Berechnung und Applikations-Simulation.

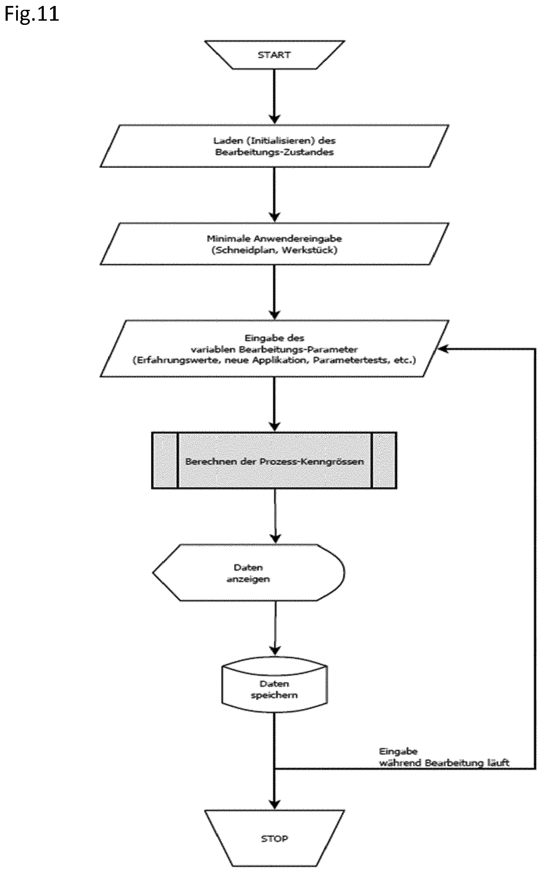

Die Applikations-Simulation wird nachfolgend unter Bezugnahme auf **Fig. 11** näher beschrieben. In der Applikations-Simulation werden die Daten des Parametersatzes P zur Prognose des zu erwartenden Bearbeitungsergebnisses E an der gefertigten Probe genutzt. Zunächst werden die bereits feststehenden Daten wie z.B. Spezifikationen geladen. Anschließend erfolgt die Eingabe des Schneidplans (Kontur) und des Werkstücks (Geometrie, Material): Dies ist definitionsgemäß die minimale Anwendereingabe. Schließlich werden die variablen Bearbeitungs-Parameter (Daten an den Konturpunkten) wie beispielsweise die Leistung, der Vorschub, die Fokuslage eingegeben oder aus einer Datenstruktur eingelesen.

Sind alle Daten des Parametersatzes P komplett verfügbar, berechnet die Anwendungs-Simulation daraus die Prozesskenngrößen PKG, zeigt sie an und speichert sie ab.

Auch wenn die Fertigung bereits läuft, können die variablen Bearbeitungs-Parameter des Parametersatzes P verändert werden. Die Fertigung sowie die Berechnung der Prozesskenngrößen werden dann jedes Mal automatisch aktualisiert.

Anwendungsbeispiel: ,Neigungswinkel der Schnittfläche'

Bei der Applikations-Berechnung musste die Fokuslage z_0 aus einer transzendenten Gleichung numerisch ermittelt werden. Hier bei der Applikations-Simulation wird der inverse Vorgang angewendet, wobei die Fokuslage als Wert in der Datenstruktur 1 des Parametersatzes P vorgegeben ist. Daraus wird nun der Neigungswinkel der Schnittfläche berechnet mit

$$\tan\langle\alpha_f\rangle = \frac{W_0}{D - 2\Delta a} \cdot \left( \sqrt{1 + \left(\frac{\Delta a - z_0}{z_R}\right)^2} - \sqrt{1 + \left(\frac{D - \Delta a - z_0}{z_R}\right)^2} \right)$$

und als Wert der Prozesskenngrößen PKG in der Datenstruktur 2 abgelegt.

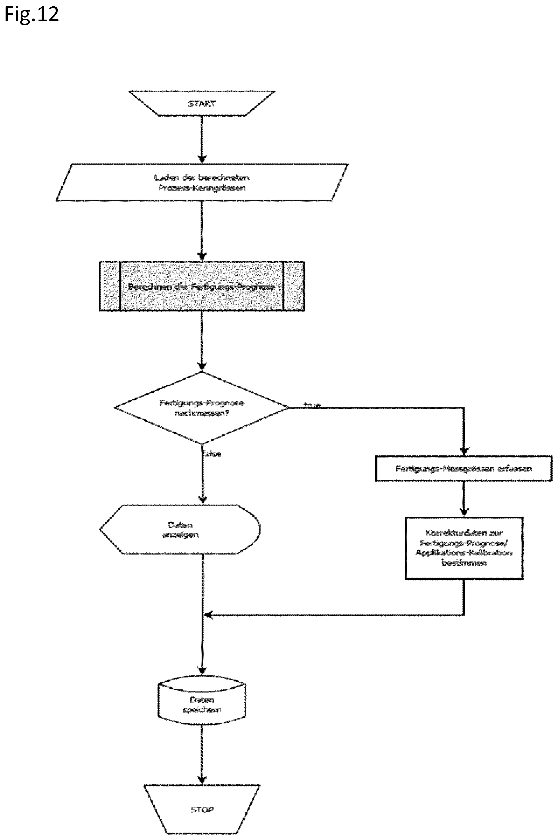

Die Fertigungs-Prognose ist der inverse Algorithmus oder die inverse Funktion der Applikations-Kalibration und wird nachfolgend unter Bezugnahme auf **Fig. 12** beschrieben.

Als erstes werden die mit der Applikations-Simulation berechneten Prozesskenngrößen geladen. Darauf werden die Funktionen des Algorithmus der Fertigungs-Prognose angewendet, als Resultat dieser Berechnungen erhält man die berechneten bzw. prognostizierten Daten für das (erwartete) Bearbeitungsergebnis $E_{soll}$. Wird z.B. im Rahmen eines Versuchs oder einer stichprobenmäßigen Überprüfung entschieden, dass die Fertigungs-Prognose (und damit die Applikations-Kalibration) nachgemessen werden müssen, so werden die entsprechenden Messverfahren durchgeführt, wodurch man die Messwerte des Bearbeitungsergebnisses Eist erhält.

Der Vergleich zwischen den berechneten und dem gemessenen Bearbeitungsergebnis $E_{ist}$ - $E_{soll}$, ausgehend vom gleichen Parametersatz P, liefert die Korrelation zwischen IST und SOLL und erlaubt die Bestimmung der Korrekturdaten für die beiden Algorithmen des Parametrierverfahrens.

Anwendungsbeispiel: Neigungswinkel der Schnittfläche

Aus dem Parametersatz P wurde die Prozesskenngröße PKG des Neigungswinkels af berechnet und gespeichert. Dieser Wert wird nun von der Fertigungs-Prognose (zusammen mit anderen Werten der Prozesskenngrößen) gelesen und daraus mit:

$$u = (D - 2\Delta a) \cdot \tan\langle\alpha_f\rangle$$

die Profilhöhe u berechnet. Als berechneter Wert stellt dieser Bearbeitungsergebnisdatensatz einen SOLL-Wert dar, der nun mit der entsprechenden Messung ermittelt werden kann.

Im Folgenden wird beschrieben, wie die Profilhöhe der Schnittfläche gemessen werden und als Eingangsdatensatz den vorstehend beschriebenen Algorithmen zugeleitet werden kann.

Mit einem Oberflächen-Messgerät wird ein Ausschnitt aus einer Schnittfläche an der Probe aufgenommen (vorzugsweise berührungslos). Mit einer optischen Erfassungseinrichtung (z.B. CCD Kamera - Makro- oder Mikroskope mit variabler Fokusebene, Weisslichtinterferometer) wird ein Bild von der Probe erfasst, in dem die Schnittfläche dargestellt ist, z.B. von einem Baustahl der Dicke 15 mm. Die Schnittfläche weist die typischen Merkmale eines Brennschnitts auf (periodische Riefenbildung im oberen Bereich, unten breite und unregelmäßige Riefen mit Nachlauf). Oberhalb der Probe ist eine Referenzfläche mit hoher Ebenheit mit eingespannt, um den Einspannwinkel zu kompensieren. Grundsätzlich wird die zu messende Probe im Messraum des Oberflächen-Messgeräts zusammen mit einer Referenzfläche in der Probenhalterung eingespannt. Die ebene Referenzfläche steht im rechten Winkel zur Schnittfläche, deren Orientierung auf die Referenzfläche zurückgeführt werden kann. Das Ergebnis einer solchen Messung kann in Form eines Falschfarbenbildes dargestellt und ausgegeben werden.

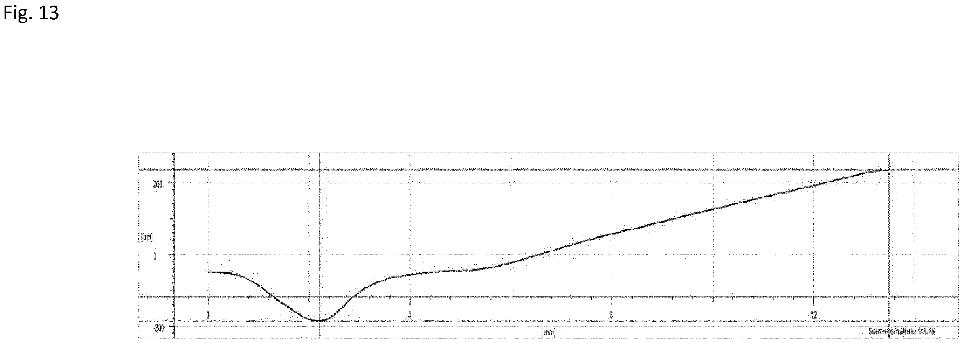

Der eigentliche Messbereich betrifft nur einen Bildausschnitt, so dass nur ein kleinerer rechteckiger oder polygonaler Ausschnitt der Schnittfläche berücksichtigt wird. Dieser Ausschnitt kann etwa 13 mm lang und 8 mm breit sein, woraus ein Δa von ungefähr einem Millimeter folgt. Über diesen rechteckigen Messbereich wird nun der gemittelte Profilverlauf der Schnittfläche in senkrechter Richtung aufgenommen. Der gemittelte Profilverlauf ist in **Fig. 13** grafisch dargestellt. Im Profilverlauf können nun das Minimum (gestrichelte Linie) und das Maximum (gepunktete Linie) ausgezeichnet werden. Die Differenz zwischen Maximum und Minimum ergibt die Profilhöhe u als Messgröße für das Bearbeitungsergebnis $E_{ist}$. Das Vorzeichen von u ist positiv, wenn die Schnitttiefe z (horizontale Achse des Profilverlaufs) des Minimums kleiner ist als diejenige des Maximums.

Nach erfolgter Bestimmung der Profilhöhe u wird der gemessene Wert in die Datenstruktur 3 des Bearbeitungsergebnisses E geschrieben. In den vorhergehenden Textabschnitten zum Anwendungsbeispiel des Konuswinkels der Schnittfuge ist beschrieben, wie dieser Wert zum Vergleich mit den berechneten oder vom Anwender eingegeben SOLL-Werten genutzt werden kann.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Für einen Fachmann ist es insbesondere offensichtlich, dass die Erfindung nicht nur für Laseranlagen L für das Schneiden angewendet werden kann, sondern auch für andere Anwendungen, wie Schweißen und/oder Beschriften und/oder Gravieren und/oder Bohren. Des Weiteren können die Bauteile des Terminals T, des Komparators und der elektronischen Verarbeitungseinheit V auf einer Hardware integriert sein oder auch auf mehrere physikalischen Produkte verteilt realisiert sein. Zudem können die vorstehend genannten Bauteile direkt auf dem Laser angeordnet sein. Ebenso kann das Parametriermodul ParM und/oder das Prognosemodul ProgM lokal auf oder an dem Laser ausgebildet sein. Alternativ kann es auch als Cloudsystem oder auf einem Server ausgebildet sein und in Datenaustausch mit dem Laser L stehen.

Der Schutzbereich der vorliegenden Erfindung ist durch die folgenden Ansprüche gegeben und wird durch die in der Beschreibung erläuterten oder den Figuren gezeigten Merkmale nicht beschränkt.

**Patentansprüche**

1. Prognoseverfahren zur Prognose eines Bearbeitungsergebnisses (E) für ein Laserbearbeitungsverfahren, mit folgenden Verfahrensschritten:

   - Einlesen (S61) eines Parametersatzes (P), der zur Ansteuerung einer Laserbearbeitungsmaschine dient;
   - Zugreifen (S62) auf ein deterministisches Prozessmodell (M), um für den eingelesenen Parametersatz (P) einen Prognosedatensatz ($E_{prog}$) für das Bearbeitungsergebnis zu berechnen (S63), wobei das deterministische Prozessmodell (M) zumindest drei Datenstrukturen (P, E, PKG) verwendet und physikalische, multidimensionale Zusammenhänge zwischen dem jeweiligen Parametersatz (P) und den physikalischen Laserbearbeitungsprozess repräsentierenden Prozesskenngrößen (PKG) und dem Bearbeitungsergebnis (E) modelliert.

2. Prognoseverfahren nach Anspruch 1, bei dem das Verfahren zusätzlich umfasst:

   - Ausführen (S65) einer Laserbearbeitung mit dem eingelesenen Parametersatz (P);
   - Messen (S66) eines Bearbeitungsergebnisses ($E_{ist}$) als IST-Werte;
   - Vergleichen (S67) der gemessenen IST-Werte (Eist) für das Bearbeitungsergebnis mit dem Prognosedatensatz ($E_{prog}$) und bei Abweichung:
   - Ausgabe (S68) eines berechneten Vergleichsergebnisses.

3. Prognoseverfahren nach dem unmittelbar vorangehenden Anspruch, bei dem auf Basis des berechneten Vergleichswertes automatisch Anpassungsprozeduren eingeleitet werden und insbesondere das Prozessmodell (M) angepasst wird.

4. Prognoseverfahren nach zumindest einem der vorangehenden Ansprüche, bei dem das Zugreifen auf das deterministische Prozessmodell (M) mittels eines Applikations-Simulationsalgorithmus und/oder mittels eines Fertigungsprognosealgorithmus erfolgt.

5. Parametrierverfahren zur automatischen Berechnung eines Parametersatzes ($P_{ber}$) zur Parametrierung eines Laserbearbeitungsverfahrens, mit folgenden Verfahrensschritten:

- Einlesen (S71) eines SOLL-Wertes für ein Bearbeitungsergebnis ($E_{soll}$);
- Zugreifen (S72) auf ein deterministisches Prozessmodell (M), um für den eingelesenen SOLL-Wert für das Bearbeitungsergebnis ($E_{soll}$) zumindest einen Parametersatz ($P_{ber}$) zu berechnen (S73), der den SOLL-Wert erfüllt, wobei das deterministische Prozessmodell (M) zumindest drei Datenstrukturen (P, E, PKG) verwendet und physikalische, multidimensionale Zusammenhänge zwischen dem jeweiligen Parametersatz (P) und den den physikalischen Laserbearbeitungsprozess repräsentierenden Prozesskenngrößen (PKG) und dem SOLL-Wert für das Bearbeitungsergebnis (E) modelliert.

6. Parametrierverfahren nach dem unmittelbar vorangehenden Anspruch, bei dem das Verfahren weiterhin umfasst:

    - Bearbeiten (S75) eines Werkstückes mit dem berechneten Parametersatz (Pber);
    - Messen (S76) eines IST-Wertes für das Bearbeitungsergebnisses (Eist) am gefertigten Werkstück;
    - Vergleichen (S77) zwischen SOLL-Wert ($E_{soll}$) und IST-Wert (Eist) für das Bearbeitungsergebnis und bei Abweichung:
    - Ausgabe (S78) eines berechneten Vergleichswertes und/oder auf Basis des berechneten Vergleichswertes: Einleiten von Anpassungsprozeduren, insbesondere: Anpassen des Prozessmodells und/oder Kalibrieren des berechneten Parametersatzes durch Zugreifen auf das deterministische Prozessmodell, so dass der eingelesen SOLL-Wert für das Bearbeitungsergebnis ($E_{soll}$) eingehalten werden kann.

7. Parametrierverfahren nach einem der vorangehenden Ansprüche, bei dem die Schritte Bearbeiten (S75), Messen (S76), Vergleichen (S77) und Ausgeben (S78) iterativ so oft wiederholt werden bis eine Abweichung zwischen SOLL-Wert und IST-Wert für das Bearbeitungsergebnis einen vorkonfigurierbaren Schwellenwert unterschreitet.

8. Parametrierverfahren nach einem der vorangehenden Ansprüche, bei dem das Zugreifen auf das deterministische Prozessmodell mittels eines Applikations-Kalibrationsalgorithmus und/oder mittels eines Applikationsberechnungsalgorithmus erfolgt.

9. Parametrierverfahren nach einem der vorangehenden Ansprüche, bei dem das Bearbeitungsergebnis (E) ein Datentupel ist mit messbaren Angaben zur Qualität des Laserbearbeitungsverfahrens, insbesondere Angaben zu einer Grathöhe bei einem Schmelzschnitt, einer Schlackenhöhe bei einem Brennschnitt, einer Kantenneigung, einer Kantenwelligkeit und/oder einer Kantenprofilhöhe, einer Oberflächenrauheit, einer Riefenhöhe und/oder einer Riefenhäufigkeit.

10. Parametrierverfahren nach einem der vorangehenden Ansprüche, bei dem das deterministisches Prozessmodell (M) verwendet wird, um ein neuronales Netz zu trainieren.

11. Computerprogramm mit Programmcode oder Programmmitteln, wobei das Computerprogramm auf einem computerlesbaren Datenträger gespeichert sein kann, wobei der Programmcode oder die Programmmittel einen Computer veranlassen, ein Verfahren nach einem der vorangehenden Parametrierverfahrensansprüche oder Prognoseverfahrensansprüche auszuführen, wenn das Computerprogramm auf einem Computer oder einer Computer-basierten Verarbeitungseinheit (V, ParM, ProgM) ausgeführt wird.

12. Parametriermodul (ParM) für eine Laserbearbeitungsmaschine (L) zur automatischen Berechnung eines Parametersatzes ($P_{ber}$) zur Parametrierung der Laserbearbeitungsmaschine (L), wobei das Parametriermodul (ParM) ausgebildet ist, ein Parametrierverfahren nach den vorangehenden Ansprüchen auszuführen.

13. Prognosemodul (ProgM) für eine Laserbearbeitungsmaschine (L) zur automatischen Berechnung eines Prognosedatensatzes ($E_{prog}$) für ein Bearbeitungsergebnis, wobei das Prognosemodul (ProgM) ausgebildet ist, ein Prognoseverfahren nach den vorangehenden Ansprüchen auszuführen.

14. Laserbearbeitungsmaschine (L) mit einem Parametriermodul (ParM) und/oder mit einem Prognosemodul (ProgM) gemäß einem der vorangehenden Ansprüche.

15. System zum Betreiben einer Laserbearbeitungsmaschine (L) zur Bearbeitung von Werkstücken, mit:

    - Der Laserbearbeitungsmaschine (L);
    - Einer Benutzerschnittstelle (UI) zur Ein- und Ausgabe von Daten;
    - Einem Speicher (DB) zur Speicherung des deterministischen Prozessmodells (M) mit:

- Einer ersten Datenstruktur, in der eine Menge von Parametersätzen (P) gespeichert ist, wobei die erste Datenstruktur eine Datenschnittstelle zur Laserbearbeitungsmaschine (L) repräsentiert;
- Einer zweiten Datenstruktur, in der eine Menge von berechneten Prozesskenngrößen (PKG) gespeichert ist;
- Einer dritten Datenstruktur, in der eine Menge von Bearbeitungsergebnissen (E) gespeichert ist, wobei die dritte Datenstruktur eine Datenschnittstelle zur einer Messvorrichtung zur Messung von Bearbeitungsergebnissen der Laserbearbeitungsmaschine (L) repräsentiert;

- Einer elektronischen Verarbeitungseinheit (V), die ausgebildet ist, eine Menge von Modellalgorithmen auf dem deterministischen Prozessmodell (M) auszuführen;
- Einer Datenverbindung zwischen den Datenstrukturen, dem Speicher (DB), der elektronischen Verarbeitungseinheit (V) und der Laserbearbeitungsmaschine (L).

16. System nach dem vorangehenden Systemanspruch, bei dem die elektronische Verarbeitungseinheit (V) ein Prognosemodul (ProgM) und/oder ein Parametriermodul (ParM) umfasst.

17. System nach einem der vorangehenden Systemansprüche, bei dem das deterministisches Prozessmodell (M) einer automatischen Selbstprüfung unterzogen wird, indem für jeweils eine Eingabe jeweils inverse Modellalgorithmen sequentiell ausgeführt werden, insbesondere ein Applikations-Simulationsalgorithmus und ein Fertigungsprognosealgorithmus und ein Applikations-Kalibrationsalgorithmus und ein Applikationsberechnungsalgorithmus, und überprüft wird, ob ein Ergebnis der sequentiellen Ausführung identisch mit der Eingabe übereinstimmt.

18. System nach einem der vorangehenden Systemansprüche, bei dem die Eingabe ein Parametersatz (P) oder ein SOLL-Wert für das Bearbeitungsergebnis ($E_{soll}$) ist.

Fig.1

Fig.2

$E_{prog}$

M

P

Fig.3

Fig.4

Fig.5

EP 3 671 373 A1

Fig.6

Fig.7

EP 3 671 373 A1

Fig.8

Flussdiagramm:

START
Applikations-
Kalibration

Laden der aktuellen
Kalibrierfunktion

Automatik-
Modus aktiv?

false → Eingabe der SOLL-Daten

true → Einlesen der IST-Daten

Berechnen der
Fertigungs-Kenngrössen mittels
aktueller Kalibrierfunktion

Schreiben der
Prozess-Kenngrössen

Applikations-Kalibration
STOP

Fig.9

Fig.10

START

Laden der aktuellen
Prozess-Kenngrössen

minimale Anwendereingabe
(Schneidplan, Werkstück)

Initialisieren und Berechnen
des Bearbeitungs-Zustands

Daten
anzeigen

Daten
speichern

STOP

Fig.11

```
                    ┌─────────────────┐
                    \     START       /
                     └───────────────┘
                             │
                             ▼
              ┌────────────────────────────────┐
             /   Laden (Initialisieren) des     /
            /      Bearbeitungs-Zustandes      /
           └────────────────────────────────┘
                             │
                             ▼
              ┌────────────────────────────────┐
             /   Minimale Anwendereingabe       /
            /    (Schneidplan, Werkstück)      /
           └────────────────────────────────┘
                             │
                             ▼
         ┌──────────────────────────────────────────────┐
        /                Eingabe des                      /
       /        variablen Bearbeitungs-Parameter         /◄──────┐
      /  (Erfahrungswerte, neue Applikation,            /        │
     /    Parametertests, etc.)                        /         │
    └──────────────────────────────────────────────┘            │
                             │                                   │
                             ▼                                   │
              ┌──┬────────────────────────────┬──┐              │
              │  │ Berechnen der              │  │              │
              │  │ Prozess-Kenngrössen        │  │              │
              └──┴────────────────────────────┴──┘              │
                             │                                   │
                             ▼                                   │
                    ┌─────────────────┐                         │
                   <      Daten        >                        │
                    \    anzeigen     /                         │
                     └───────────────┘                          │
                             │                                   │
                             ▼                                   │
                    ┌─────────────────┐                         │
                   (      Daten        )                        │
                   (    speichern     )                         │
                    └─────────────────┘                         │
                             │              Eingabe             │
                             │      während Bearbeitung läuft   │
                             ├──────────────────────────────────┘
                             ▼
                    ┌─────────────────┐
                    \     STOP        /
                     └───────────────┘
```

Fig.12

```
                    ┌──────────────┐
                    \    START     /
                     ──────────────
                           │
                           ▼
              ╱──────────────────────────╲
             ╱    Laden der berechneten    ╲
             ╲    Prozess-Kenngrössen      ╱
              ╲──────────────────────────╱
                           │
                           ▼
          ┌──┬────────────────────────────┬──┐
          │  │ Berechnen der Fertigungs-Prognose │  │
          └──┴────────────────────────────┴──┘
                           │
                           ▼
                    ╱─────────────╲
                   ╱  Fertigungs-   ╲         true
                  ╱   Prognose       ╲─────────────────┐
                  ╲   nachmessen?    ╱                  │
                   ╲               ╱                    │
                    ╲─────────────╱                     │
                          │                             ▼
                       false              ┌──────────────────────────┐
                          │               │ Fertigungs-Messgrössen erfassen │
                          │               └──────────────────────────┘
                          │                             │
                          ▼                             ▼
                 ╱─────────────╲          ┌──────────────────────────┐
                │    Daten      │          │     Korrekturdaten zur   │
                │   anzeigen    │          │   Fertigungs-Prognose/   │
                 ╲─────────────╱           │  Applikations-Kalibration │
                          │                │        bestimmen         │
                          │                └──────────────────────────┘
                          │                             │
                          │◄────────────────────────────┘
                          ▼
                    ╭─────────────╮
                    │    Daten     │
                    │  speichern   │
                    ╰─────────────╯
                          │
                          ▼
                    ╱──────────────╲
                   ╱     STOP        ╲
                    ──────────────────
```

Fig. 13

**Europäisches Patentamt**
**European Patent Office**
**Office européen des brevets**

# EUROPÄISCHER RECHERCHENBERICHT

**Nummer der Anmeldung**

EP 18 21 4096

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/234240 A1 (YAMAZAKI ETSUO [JP] ET AL) 25. Dezember 2003 (2003-12-25) * Absatz [0032] - Absatz [0106] * * Anspruch 1; Abbildung 3 * ----- | 1-4,11, 13-18 | INV. G05B13/04 B23K26/00 |
| A | US 2006/102601 A1 (SHIRK MICHAEL [US] ET AL) 18. Mai 2006 (2006-05-18) * das ganze Dokument * ----- | 1-4,11, 13-18 | |
| A | US 2018/275621 A1 (KNIAZEV ANDREI [US] ET AL) 27. September 2018 (2018-09-27) * das ganze Dokument * ----- | 1-4,11, 13-18 | |

| | | | RECHERCHIERTE SACHGEBIETE (IPC) |
|---|---|---|---|
| | | | G05B B23K |

~~Der vorliegende Recherchenbericht wurde für alle Patentans~~prüche erstellt

| Recherchenort | Abschlußdatum der Recherche | Prüfer |
|---|---|---|
| Den Haag | 21. Juni 2019 | Marinica, Raluca |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

Nummer der Anmeldung

EP 18 21 4096

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-4, 11, 13-18

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 18 21 4096

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-4, 11, 13-18

   Prognoseverfahren zur Prognose eines Bearbeitungsergebnisses für ein Laserbearbeitungsverfahren.
   ---

2. Ansprüche: 5-10, 12

   Parametrierverfahren zur automatischen Berechnung eines Parametersatzes zur Parametrierung eines Laserbearbeitungsverfahrens.
   ---

**ANHANG ZUM EUROPÄISCHEN RECHERCHENBERICHT
ÜBER DIE EUROPÄISCHE PATENTANMELDUNG NR.**

EP 18 21 4096

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-06-2019

| Im Recherchenbericht angeführtes Patentdokument | Datum der Veröffentlichung | Mitglied(er) der Patentfamilie | Datum der Veröffentlichung |
|---|---|---|---|
| US 2003234240 A1 | 25-12-2003 | DE 60305099 T2<br>EP 1375052 A1<br>JP 3660328 B2<br>JP 2004025204 A<br>US 2003234240 A1 | 21-12-2006<br>02-01-2004<br>15-06-2005<br>29-01-2004<br>25-12-2003 |
| US 2006102601 A1 | 18-05-2006 | KEINE | |
| US 2018275621 A1 | 27-09-2018 | US 2018275621 A1<br>WO 2018173569 A1 | 27-09-2018<br>27-09-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2533934 B1

- US 20170113300 A1

**In der Beschreibung aufgeführte Nicht-Patentliteratur**

- **R. POPRAWE.** Lasertechnik für die Fertigung. Springer-Verlag, 2005, 455

- **D. SCHUÖCKER.** Dynamic Phenomena in Laser Cutting and Cut Quality. *Appl.Phys.,* 1986, vol. B 40, 9-14